(19) **Europäisches Patentamt / European Patent Office / Office européen des brevets**

(11) **EP 4 472 281 A1**

(12) **EUROPEAN PATENT APPLICATION**
published in accordance with Art. 153(4) EPC

(43) Date of publication:
04.12.2024 Bulletin 2024/49

(21) Application number: 22923868.8

(22) Date of filing: 28.01.2022

(51) International Patent Classification (IPC):
H04W 28/16 (2009.01)    H04W 16/28 (2009.01)
H04W 24/10 (2009.01)    H04W 72/04 (2023.01)

(52) Cooperative Patent Classification (CPC):
H04W 16/28; H04W 24/10; H04W 28/16;
H04W 72/04

(86) International application number:
PCT/JP2022/003341

(87) International publication number:
WO 2023/145004 (03.08.2023 Gazette 2023/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: NTT DOCOMO, INC.
Tokyo 100-6150 (JP)

(72) Inventors:
• MATSUMURA, Yuki
  Tokyo 100-6150 (JP)
• NAGATA, Satoshi
  Tokyo 100-6150 (JP)
• WANG, Jing
  Beijing 100190 (CN)
• CHEN, Lan
  Beijing 100190 (CN)

(74) Representative: Hoffmann Eitle
Patent- und Rechtsanwälte PartmbB
Arabellastraße 30
81925 München (DE)

(54) **TERMINAL, WIRELESS COMMUNICATION METHOD, AND BASE STATION**

(57) A terminal according to one aspect of the present disclosure includes: a receiving section that receives a configuration indicating X channel measurement resources for X transmission/reception points (TRPs) for coherent joint transmission; and a control section that controls reporting of channel state information (CSI) part 1 and CSI part 2, based on the configuration. According to one aspect of the present disclosure, it is possible to appropriately perform CSI reporting for CJT.

FIG. 18A

Option 5-1

| CSI part 1 for CJT CSI for 4 TRPs |
|---|
| CSI part 1 for CJT CSI for a TRP (1st CJT CSI) |
| CSI part 1 for CJT CSI for a TRP (2nd CJT CSI) |
| CSI part 1 for CJT CSI for a TRP (3rd CJT CSI) |
| CSI part 1 for CJT CSI for a TRP (4th CJT CSI) |

| CSI part 2 for CJT CSI for 4 TRPs |
|---|
| CSI part 2 for CJT CSI for a TRP (1st CJT CSI) |
| CSI part 2 for CJT CSI for a TRP (2nd CJT CSI) |
| CSI part 2 for CJT CSI for a TRP (3rd CJT CSI) |
| CSI part 2 for CJT CSI for a TRP (4th CJT CSI) |

FIG. 18B

Option 5-2

| CSI part 1 for CJT CSI for 4 TRPs |
|---|
| CSI part 1 for CJT CSI for a TRP (1st CJT CSI) |

| CSI part 2 for CJT CSI for 4 TRPs |
|---|
| CSI part 2 for CJT CSI for a TRP (1st CJT CSI) |
| CSI part 1 and part 2 for CJT CSI for a TRP (2nd CJT CSI) |
| CSI part 1 and part 2 for CJT CSI for a TRP (3rd CJT CSI) |
| CSI part 1 and part 2 for CJT CSI for a TRP (4th CJT CSI) |

EP 4 472 281 A1

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), it is studied to report channel state information (CSI) based on reception of a reference signal. It is also studied that one or a plurality of transmission/reception points (TRPs) (single TRP (STRP) / multi-TRP (Multi TRP (MTRP))) perform DL transmission to a terminal (user terminal, User Equipment (UE)). Coherent joint transmission (CJT) using multi-TRP is also studied.

However, study about configuration/reporting of CSI for CJT has not advanced. Unless such a method is clearly defined, communication throughput, communication quality, and the like may degrade.

Thus, an object of the present disclosure is to provide a terminal, a radio communication method, and a base station that appropriately performs CSI reporting for CJT.

Solution to Problem

A terminal according to one aspect of the present disclosure includes: a receiving section that receives a configuration indicating X channel measurement resources for X transmission/reception points (TRPs) for coherent joint transmission; and a control section that controls reporting of channel state information (CSI) part 1 and CSI part 2, based on the configuration.

Advantageous Effects of Invention

According to one aspect of the present disclosure, it is possible to appropriately perform CSI reporting for CJT.

Brief Description of Drawings

[FIG. 1] FIG. 1 shows an example of a 16-level quantization table.
[FIG. 2] FIG. 2 shows an example of an 8-level quantization table.
[FIG. 3] FIG. 3 shows an example of transmission using K CSI-RS ports.
[FIG. 4] FIGS. 4A and 4B show an example of NCJT and CJT.
[FIG. 5] FIG. 5 shows an example of option 1-1.
[FIG. 6] FIG. 6 shows another example of option 1-1.
[FIG. 7] FIG. 7 shows an example of option 1-2.
[FIG. 8] FIGS. 8A and 8B show examples of option 2-A.
[FIG. 9] FIG. 9 shows examples of CJT CSI of option 3-A.
[FIG. 10] FIG. 10 shows an example of a codebook of option 3-A.
[FIG. 11] FIG. 11 shows examples of CJT CSI of option 3-B.
[FIG. 12] FIG. 12 shows an example of a codebook of option 3-B.
[FIG. 13] FIG. 13 shows examples of CJT CSI of option 3-C.
[FIG. 14] FIG. 14 shows examples of CJT CSI of option 3-D.
[FIG. 15] FIG. 15 shows an example of a new table for an inter-TRP amplitude codebook.
[FIG. 16] FIG. 16 shows an example of a new table for an inter-TRP phase codebook.
[FIG. 17] FIG. 17 shows an example of a new table for an inter-TRP coefficient codebook.
[FIG. 18] FIGS. 18A and 18B show examples of mapping orders of CSI parts 1 and 2 according to a fifth embodiment.
[FIG. 19] FIG. 19 is a diagram to show an example of a schematic structure of a radio communication system according to one embodiment.

[FIG. 20] FIG. 20 is a diagram to show an example of a structure of a base station according to one embodiment.

[FIG. 21] FIG. 21 is a diagram to show an example of a structure of a user terminal according to one embodiment.

[FIG. 22] FIG. 22 is a diagram to show an example of a hardware structure of the base station and the user terminal according to one embodiment.

[FIG. 23] FIG. 23 is a diagram to show an example of a vehicle according to one embodiment.

Description of Embodiments

(CSI Report (or Reporting))

In Rel-15 NR, a terminal (also referred to as a user terminal, a User Equipment (UE), and the like) generates (also referred to as determines, calculates, estimates, measures, and the like) channel state information (CSI), based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

The CSI-RS may include at least one of a non-zero power (NZP) CSI-RS and CSI-Interference Management (CSI-IM). The SS/PBCH block is a block including the SS and the PBCH (and a corresponding DMRS), and may be referred to as an SS block (SSB) or the like. The SS may include at least one of a primary synchronization signal (PSS) and a secondary synchronization signal (SSS).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The UE may receive information related to CSI reporting (report configuration information), and control CSI reporting, based on the report configuration information. The report configuration information may be, for example, a radio resource control (RRC) information element (IE) "CSI-ReportConfig." Note that, in the present disclosure, the RRC IE may be interchangeably interpreted as an RRC parameter, a higher layer parameter, and the like.

The report configuration information (for example, the RRC IE "CSI-ReportConfig") may include at least one of the following, for example.

- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported
- Information (resource information, for example, an RRC IE "CSI-ResourceConfigId") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A-CSI) report, or a semi-persistent (semi-permanent) CSI report (SP-CSI) report.

The report quantity information may specify at least one combination of the above CSI parameters (for example, the CRI, RI, PMI, CQI, LI, L1-RSRP, and the like).

The resource information may be an ID of the resource for the RS. The resource for the RS may include, for example, a non-zero power CSI-RS resource or SSB, and a CSI-IM resource (for example, a zero power CSI-RS resource).

The frequency domain information may indicate the frequency granularity of CSI reporting. The frequency granularity may include, for example, a wideband and a subband. The wideband is the entire CSI reporting band. The wideband may be, for example, the entire certain carrier (component carrier (CC), cell, serving cell) or may be the entire bandwidth part (BWP) in the certain carrier. The wideband may be interpreted as CSI reporting band, the entire CSI reporting band, and the like.

The subband may be part of the wideband and constituted of one or more resource blocks (RBs or physical resource blocks (PRBs)). The size of the subband may be determined according to the size of the BWP (the number of PRBs).

The frequency domain information may indicate which one of the PMI of the wideband and the PMI of the subband is to be reported (frequency domain information may include an RRC IE "pmi-FormatIndicator" to be used for determination of one of wideband PMI reporting and subband PMI reporting, for example). The UE may determine the frequency granularity of the CSI reporting (in other words, one of wideband PMI reporting and subband PMI reporting), based on at least one of the report quantity information and the frequency domain information.

When wideband PMI reporting is configured (determined), one wideband PMI may be reported for the entire CSI reporting band. In contrast, when subband PMI reporting is configured, a single wideband indication i1 may be reported for the entire CSI reporting band, and one subband indication i2 for each of one or more subbands in the entire CSI reporting (for example, subband indication for each subband) may be reported.

The UE performs channel estimation by using a received RS to estimate a channel matrix H. The UE feeds back an index (PMI) determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

In the space domain, a CSI report may include one or more types of CSI. For example, the CSI may include at least one of a first type (Type 1 CSI) used for single-beam selection and a second type (Type 2 CSI) used for multi-beam selection. The single beam may be interpreted as a single layer, and the multi-beam may be interpreted as a plurality of beams. Multi-user multiple input multiple output (MIMO) may be assumed for Type 2 CSI without multi-user MIMO being assumed for Type 1 CSI.

The above codebook may include a codebook for Type 1 CSI (also referred to as a Type 1 codebook and the like) and a codebook for Type 2 CSI (also referred to as a Type 2 codebook and the like). Type 1 CSI may include Type 1 single-panel CSI and Type 1 multi-panel CSI for each of which a different codebook (Type 1 single-panel codebook and Type 1 multi-panel codebook) may be defined.

In the present disclosure, Type 1 and Type I may be interchangeably interpreted. In the present disclosure, Type 2 and Type II may be interchangeably interpreted.

An uplink control information (UCI) type may include at least one of Hybrid Automatic Repeat reQuest ACKnowledgement (HARQ-ACK), scheduling request (SR), and CSI. The UCI may be carried on a PUCCH or may be carried on a PUSCH.

In Rel-15 NR, UCI can include one CSI part for wideband PMI feedback. CSI report #n includes, when being reported, PMI wideband information.

In Rel-15 NR, UCI can include two CSI parts for subband PMI feedback. CSI part 1 includes wideband PMI information. CSI part 2 includes one piece of wideband PMI information and some pieces of subband PMI information. CSI part 1 and CSI part 2 are separated for encoding.

In Rel-15 NR, a UE is configured with an N (N ≥ 1) CSI report configuration report setting(s) and an M (M ≥ 1) CSI resource configuration resource setting(s) by a higher layer. For example, a CSI report configuration (CSI-ReportConfig) includes a resource setting for channel measurement (resourcesForChannelMeasurement), a CSI-IM resource setting for interference (csi-IM-ResourceForInterference), an NZP-CSI-RS setting for interference (nzp-CSI-RS-ResourceForInterference), report quantity (reportQuantity), and the like. Each of the resource setting for channel measurement, the CSI-IM resource setting for interference, and the NZP-CSI-RS setting for interference is associated with a CSI resource configuration (CSI-ResourceConfig, CSI-ResourceConfigId). The CSI resource configuration includes a list of CSI-RS resource sets (csi-RS-ResourceSetList, for example, NZP-CSI-RS resource sets or CSI-IM resource sets).

To enable more dynamic channel/interference hypotheses for NCJT for both FR1 and FR2, evaluation and definition of CSI reporting for transmission by at least one of DL multi-TRP and multi-panel are studied.

(Multi-TRP)

In NR, it is studied that one or a plurality of transmission/reception points (TRPs) (multi-TRP (multi TRP (MTRP))) perform DL transmission to a UE by using one or a plurality of panels (multi-panel). It is also studied that the UE performs UL transmission to the one or plurality of TRPs by using the one or plurality of panels.

Note that the plurality of TRPs may correspond to the same cell identifier (ID) or may correspond to different cell IDs. The cell ID may be a physical cell ID or a virtual cell ID.

Multi-TRP (TRPs #1 and #2) may be connected via an ideal/non-ideal backhaul to exchange information, data, and the like. A different codeword (Code Word (CW)) and a different layer may be transmitted from each TRP of the multi-TRP. As a mode of multi-TRP transmission, non-coherent joint transmission (NCJT) may be employed.

In NCJT, for example, TRP #1 performs modulation mapping on a first codeword, performs layer mapping, and transmits a first PDSCH in layers of a first number (for example, two layers) by using first precoding. TRP #2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI (S-DCI), single PDCCH) (single master mode). The one piece of DCI may be transmitted from one TRP of the multi-TRP. The plurality of PDSCHs from the multi-TRP may be separately scheduled by using a plurality of pieces of DCI (multi-DCI (M-DCI), multi-PDCCH (multiple PDCCHs)) (multi-master mode). The plurality of pieces of DCI may be transmitted from the respective TRPs of the multi-TRP. The UE may assume to transmit, to the different TRPs, separate CSI reports related to the respective TRPs. Such CSI feedback may be referred to as separate feedback, separate CSI feedback, and the like. In the present disclosure, "separate" may be interchangeably interpreted as "independent."

Note that CSI feedback for transmitting, to one of the TRPs, CSI reports related to both of the TRPs may be used. Such CSI feedback may be referred to as joint feedback, joint CSI feedback, and the like.

For example, in a case of separate feedback, the UE is configured to transmit a CSI report for TRP #1 to TRP #1 by using a certain PUCCH (PUCCH 1) and transmit a CSI report for TRP #2 to TRP #2 by using another PUCCH (PUCCH 2). In a case of joint feedback, the UE transmits a CSI report for TRP #1 and a CSI report for TRP #2 to TRP #1 or #2.

According to such a multi-TRP scenario, more flexible transmission control using a channel with high quality is possible.

(Codebook Configuration)

The UE is configured with parameters related to a codebook (codebook configuration (CodebookConfig)) by higher layer signaling (RRC signaling). The codebook configuration is included in a higher layer (RRC) parameter, CSI report configuration (CSI-ReporConfig).

In the codebook configuration, at least one codebook among type 1 single panel (type1-SinglePanel), type 1 multi-panel (type1-MultiPanel), type 2 (typeII), and type 2 port selection (typeII-PortSelection).

Parameters of the codebook include a parameter related to codebook subset restriction (CBSR) (···Restriction). The configuration of the CBSR is a bit indicating which PMI report is permitted ("1") and which PMI report is not permitted ("0") for a precoder associated with a bit of the CBSR. One bit of a CBSR bitmap corresponds to one codebook index / antenna port.

(CSI Report Configuration)

A Rel-16 CSI report configuration (CSI-ReportConfig) includes CSI-RS resources for channel measurement (resourcesForChannelMeasurement (CMR)), CSI-RS resources for interference measurement (csi-IM-ResourcesForInterference (ZP-IMR)), nzp-CSI-RS-ResourcesForInterference (NZP-IMR), and the like, in addition to the codebook configuration (CodebookConfig). Among CSI-ReportConfig parameters, parameters excluding codebookConfig-r16 are also included in Rel-15 CSI report configuration.

In Rel. 17, enhanced CSI report configuration (CSI-ReportConfig) for multi-TRP CSI measurement/reporting employing NCJT is studied. In the CSI report configuration, two CMR groups corresponding to two respective TRPs are configured. The CMRs in a CMR group may be used for measurement of at least one of multi-TRP and a single TRP employing NCJT. An N CMR pair(s) of NCJT is configured by RRC signaling. The UE may be configured with whether to use the CMRs of the CMR pair(s) for single-TRP measurement, by RRC signaling.

It is studied to support at least one of options 1 and 2 below for CSI reporting related to multi-TRP/panel NCJT measurement and configured by a single CSI report configuration.

<Option 1>

The UE is configured to report X (X = 0, 1, 2) CSI(s) related to single-TRP measurement assumptions/hypotheses and one piece of CSI related to NCJT measurement. In a case where X = 2, two pieces of CSI relate to two different single-TRP measurements using CMRs of different CMR groups.

<Option 2>

The UE may be configured to report one piece of CSI related to the best measurement result among measurement hypotheses about NCJT and a single TRP.

As described above, in Rel. 15/16, CBSR is configured for each codebook configuration of each CSI report configuration. In other words, CBSR is applied to all the CMRs and the like in the corresponding CSI report configuration.

However, in CSI report configuration for multi-TRP in Rel. 17 by a CSI report configuration, a measurement configuration as the following may be performed when options 1 and 2 above are applied.

Option 1 (X = 0): measurement of only CSI of NCJT.
Option 1 (X = 1): measurement of CSI of NCJT and CSI of a single TRP (one TRP).
Option 1 (X = 2): measurement of CSI of NCJT and pieces of CSI of single TRPs (two TRPs).
Option 2: measurement of both CSI of NCJT and CSI of a single TRP.

(Type 2 CSI)

By assuming ideal backhaul, synchronization, and the same number of antenna ports over a plurality of TRPs, CSI acquisition for coherent joint transmission (CJT) for FR1 and up to four TRPs is studied. For CJT multi-TRP for FDD, improvement of a Rel-16/17 type 2 codebook is studied.

For Rel-16 type 2 CSI, information based on the following equation may be reported for a given layer k by a UE.

$$W_k = W_1 \tilde{W}_k W_{f,k}^H \quad (1)$$

Here, W denotes a matrix, and W~ indicates W with ~ thereabove (w tilde). Nt denotes the number of ports. $N_3$ denotes the number of subbands. L denotes the number of beams.

$W_1(N_t \times 2L)$ denotes a matrix composed of spatial domain (SD) bases. A plurality of indices of a two-dimensional discrete Fourier transform (2D-DFT) vector and a two-dimensional over-sampling factor are reported.

$\tilde{W}_k(2L \times M_v)$ denotes a matrix composed of combination coefficients (subband complex linear combination (LC) coefficients). $K_0$ non-zero coefficients (NZCs) at maximum are reported. The report is composed of two parts including a bitmap for mapping an NZC position and quantization NZC.

$W_{f,k}(N_3 \times M_v)$ denotes a matrix composed of frequency domain (FD) bases. There are $M_v$ DFT bases for each layer. In a case of $N_3 > 19$, $M_v$ DFTs are selected from an intermediate subset (InS) of a size $N_3'$ ($<N_3$). In a case of $N_3 \leq 19$, $\log2 (C (N_3 - 1, M_v - 1))$ bits are reported. Here, $C(N_3 - 1, M_v - 1)$ denotes the number of combinations for selecting $M_v - 1$ from $N_3 - 1$ and is also referred to as binomial coefficients.

Complex coefficients to be reported in $\tilde{W}_k$ are amplitude and a phase quantized separately.

{Amplitude Quantization}

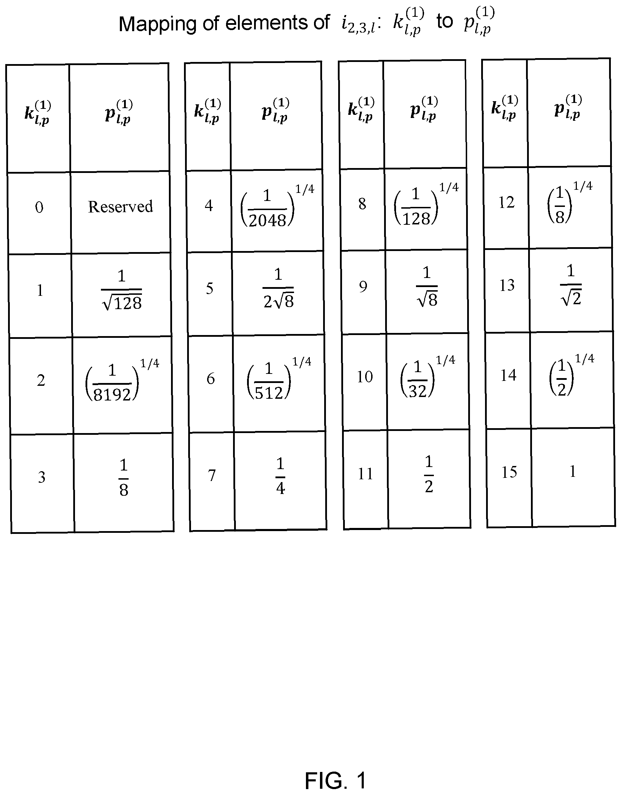

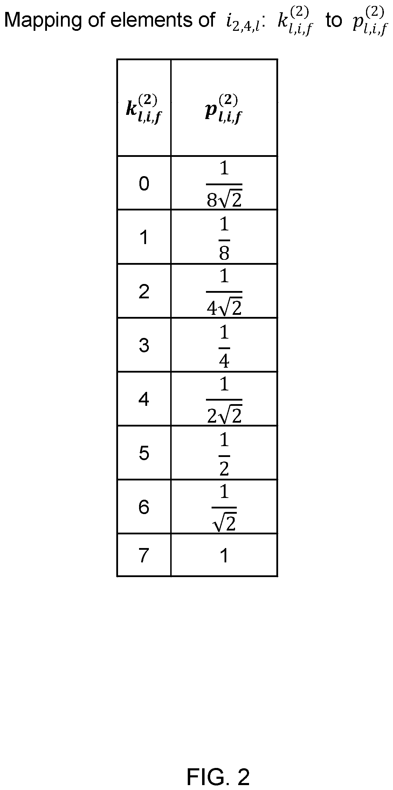

Polarized-wave-specific reference amplitude corresponds to 16-level quantization using the table in FIG. 1. All the other coefficients correspond to 8-level quantization using the table in FIG. 2.

{Phase Quantization}

All the coefficients are quantized by using 16-PSK. For example, $\phi_{l,i} = \exp(i2\pi c_{l,i}/16)$ and $c_{l,i} \in \{0, ..., 15\}$. Here, $c_{l,i}$ is a phase coefficient reported for an associated phase value $\phi_{l,i}$ by a UE (by using four bits).

Rel-16 type 2 CSI feedback on a PUSCH includes two parts. Part 1 has a fixed payload size and is used for identification of the number of information bits in part 2. In enhanced type 2 CSI feedback, part 1 includes an RI, CQI, and indication of the total number of non-zero amplitudes over a plurality of layers for enhanced type 2 CSI. The fields of part 1 are encoded separately. Part 2 includes a PMI of the enhanced type 2 CSI. Parts 1 and 2 are encoded separately. CSI part 2 (PMI) includes at least one of an over-sampling factor, a plurality of indices of 2D-DFT bases, an index $M_{initial}$ of the initial DFT base of a selected DFT window, a DFT base selected for each layer, non-zero LC coefficients (amplitude and phase) for each layer, the strongest coefficient indicator of each layer, and the amplitude of the strongest coefficient of each layer / polarized wave.

The plurality of PMI indices associated with different pieces of CSI part 2 information may be as follows for the k-th layer.

- $i_{1,1}$: over-sampling factor
- $i_{1,2}$: a plurality of indices of 2D-DFT bases
- $i_{1,5}$: index $M_{initial}$ of the initial DFT base of a selected DFT window
- $i_{1,6,k}$: DFT base selected for the k-th layer
- $i_{1,7,k}$: bitmap for the k-th layer
- $i_{1,8,k}$: strongest coefficient indicator for the k-th layer
- $i_{2,3,k}$: amplitude of the strongest coefficient (for both of polarized waves) of the k-th layer
- $i_{2,4,k}$: amplitude of reported coefficient of k-th layer
- $i_{2,5,k}$: phase of reported coefficient of k-th layer

i1,5 and i1,6,k are PMI indices for DFT reporting. Only in a case of $N_3 > 19$, $i_{1,5}$ is reported.

As grouping of CSI part 2, pieces of PMI information are divided into three groups (groups 0 to 2) for a given CSI report. This is important when CSI omission is performed. Each reported element of indices $i_{2,4,l}$, $i_{2,5,l}$, and $i_{1,7,l}$ is associated with a specific priority rule. Groups 0 to 2 are as follows.

- Group 0: indices $i_{1,1}$, $i_{1,2}$, $i_{1,8,l}$ (1 = 1, ..., v)
- Group 1: index $i_{1,5}$ (when reported), index $i_{1,6,l}$ (when reported), (v2L$M_v$ floor($K^{NZ}/2$)) highest (high order) priority element(s) in $i_{1,7,l}$, $i_{2,3,l}$, (ceil($K^{NZ}/2$) - v) highest (high order) priority element (s) in $i_{2,4,l}$, and (ceil($K^{NZ}/2$) - v) highest (high order) priority element (s) in $i_{2,5,l}$ (l = 1, ..., v)
- Group 2: floor($K^{NZ}/2$) lowest (low order) priority element(s) in $i_{1,7,l}$, floor($K^{NZ}/2$) lowest (low order) priority element(s) in $i_{2,4,1}$, and floor ($K^{NZ}/2$) lowest (low order) priority element (s) in $i_{2,5,l}$ (l = 1, ..., v)

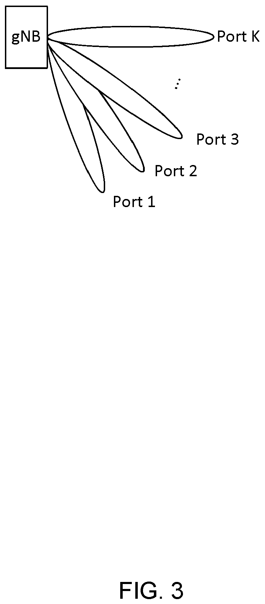

In Rel-16 type 2 port selection (PS) CSI, a type 2 PS codebook (CB) does not require a UE to derive an SD beam in consideration of 2D-DFT bases in a normal type 2 CB. Instead, a base station transmits CSI-RSs by using K CSI-RS ports beamformed in consideration of a set of spatial domain (SD) beams (FIG. 3). The UE identifies the L ($\leq K$) best CSI-RS ports and reports the indices of the CSI-RS ports in $W_1$.

For layer 1 $\in$ {1, 2, 3, 4}, subband (SB)-wise precoder generation is given by the following equation.

$$W_1(N_t \ x \ N_3) \ = \ QW_1W^{\sim}_1W_{f,1}^H \ (2)$$

Here, Q(Nt x K) denotes K SD beams used for CSI-RS beamforming. W1(K x 2L) denotes a block diagonal matrix. $W^{\sim}_k$(2L $\times$ M) denotes an LC coefficient matrix. $W_{f,l}$ (N$_3$ $\times$ M) denotes a DFT base vector (FD base). K is configured by a higher layer. L is configured by a higher layer. $P_{CSI-RS} \in$ {4, 8, 12, 16, 24, 32}. In a case of $P_{CSI-RS} > 4$, the following is established, L $\in$ {2, 3, 4}.

In Rel-17 type 2 PS CSI, each CSI-RS port is beamformed by using an SD beam and an FD base vector. Each port is associated with an SD-FD pair.

For a given layer k, information based on the following equation may be reported by a UE.

$$W_k(K \ x \ N_3) \ = \ W_1W^{\sim}_kW_{f,k}^H \ (3)$$

For W$_1$(K $\times$ 2L), each matrix block is composed of L columns of a (K x K) unit matrix (identity matrix). A base station transmits K beamformed CSI-RS ports. Each port is associated with an SD-FD pair. The UE selects L ports from the K ports and reports the L ports as part of a PMI (W$_{1,l}$) to the base station.

$W^{\sim}_k$(2L $\times$ M$_v$) denotes a matrix composed of combination coefficients (subband complex LC coefficients). K$_0$ NZCs are reported at maximum. The report is composed of two parts including a bitmap for mapping an NZC position and quantization NZC. In a specific case, the bitmap may be omitted.

$W_{f,k}$(N$_3$ $\times$ M$_v$) denotes a matrix composed of a plurality of FD bases. There are M$_v$ DFT bases for each layer. The base station may omit W$_{f,k}$. When W$_{f,k}$ is on, M$_v$ additional FD bases are reported. When W$_{f,k}$ is off, no additional FD base is reported.

For Rel-17 NCJT CSI, two CMR groups with K$_s$ (= K1 + K2) CMRs are configured for a UE. K1 and K2 are the respective numbers of CMRs in the two CMR groups. By being selected from all possible pairs, N CMR pairs are configured by a higher layer. N = 1 and K$_s$ = 2 are supported. N$_{max}$ = 2 is an optional feature of the UE. N$_{s,max}$ = 2 is an optional feature of the UE.

The UE may support at least one of the following two options.

{Option 1}

The UE may be configured to report an X piece(s) of CSI associated with single-TRP measurement hypotheses and one piece of CSI related to an NCJT measurement hypothesis. X may be 0, 1, or 2 (X = 0, 1, 2). In a case where X = 2, two pieces of CSI are associated with different single-TRP measurement hypotheses using a plurality of CMRs of different CMR groups. Supporting X = 1, 2 is an optional feature for this option 1.

{Option 2}

The UE may be configured to report one piece of CSI associated with the best one of the NCJT measurement hypothesis and single-TRP measurement hypotheses.

(JT)

Joint transmission (JT) may mean simultaneous data transmission from a plurality of points (for example, TRPs) to a single UE.

Rel. 17 supports NCJT from two TRPs. PDSCHs from the two TRPs may be precoded independently and may be decoded independently. Frequency resources may be non-overlapping, partial overlapping, or full-overlapping. When overlapping occurs, the PDSCH from one of the TRP interferes the PDSCH from the other TRP.

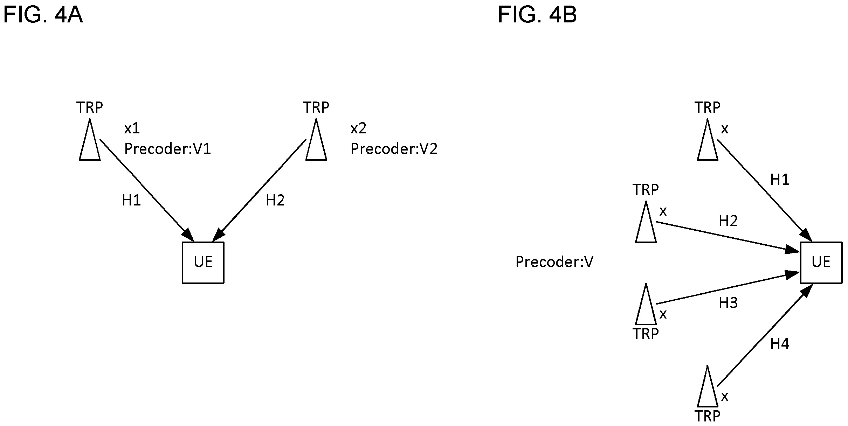

FIG. 4A shows an example of NCJT from two TRPs. A signal X$_1$ from a first TRP is precoded with a precoding matrix V$_1$, for transmission, affected by a channel matrix H$_1$, and received as a signal y$_1$. A signal x$_2$ from a second TRP is precoded with a precoding matrix V$_2$, for transmission, affected by a channel matrix H$_2$, and received as a signal y$_2$. A layer i may be from one TRP. Here, the following may be established: H$_1$ = U$_1$ $\Sigma$ V$_1^H$, H$_2$ = U$_2$ $\Sigma$ V$_2^H$, y$_1$ = H$_1$V$_1$x$_1$, and y$_2$ = H$_2$V$_2$x$_2$.

In Rel. 18, it is studied to support CJT using up to four TRPs. Data from four TRPs may be precoded coherently and transmitted to a UE in the same time-frequency resources. For example, the same precoding matrix may be used in consideration of channels from the four TRPs. "Coherent" may beam that the phases of a plurality of received signals have a specific relationship. Signal quality may be improved by using four-TRP joint precoding, and there may be no interference between the four TRPs. Data may be subjected only to interference other than interference by the four TRPs.

FIG. 4B shows an example of CJT from four TRPs. Signals from first to fourth TRPs are precoded with a precoding matrix V and transmitted. Signals x from the first to fourth TRPs are affected by respective channel matrices H$_1$, H$_2$, H$_3$, and H$_4$ and received as signals y. A layer i may be from the four TRPs. Here, the following may be established: H = H$_1$ + H$_2$ + H$_3$ + H$_4$ = U $\Sigma$ V$^H$ and y = HVx.

In an ideal case (where the four TRPs are co-located (can be regarded as being at the same location)), joint estimation of the channel matrices H aggregated can be performed, and a joint precoding matrix V can be fed back. However, four paths may differ in large scale pathloss significantly. The joint precoding matrix V based on a constant module codebook is not accurate. In this case, feedback for each TRP and an inter-TRP coefficient can be matched by a current NR type 2 codebook.

For CJT of up to four TRPs in FR1, selection of four TRPs may be semi-statistic. Hence, the selection and also configuration of four CMRs for channel measurement (four CSI-RS resources) may be semi-static. Dynamic indication of four TRPs from a list of CSI-RS resources is also possible but is less likely.

The four TRPs are different in pathloss to the UE. Hence, it is difficult if only one aggregated piece of CSI representing a joint channel matrix is reported.

In consideration of operation of fallback to NCJT (in other words, single TRP), CSI of each TRP (in other words, single-TRP CSI such as Rel-17 NCJT CSI) is also important.

It is a problem how to report CJT CSI and consider the possibility of x-TRP CJT to support dynamic operation over 2-TRP CJT, 3-TRP CJT, and 4-TRP CJT. Reported CJT CSI may enable CSI update of a base station for x-TRP CJT.

The following problems are conceivable.

{Problem 1} 4-TRP CMR configuration
{Problem 2} IMR configuration
{Problem 3} new codebook and new report content for CJT CSI for up to four TRPs
{Problem 4} CSI priority and CSI omission of new report content

Study about such problems has not advanced. Unless such a study is sufficient, throughput, communication quality, and the like may degrade.

Thus, the inventors of the present invention came up with the idea of a method of configuring/reporting CSI for CJT.

Embodiments according to the present disclosure will be described in detail with reference to the drawings as follows. Note that the embodiments (for example, the cases) below may each be employed individually, or at least two of the embodiments may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, time domain resource allocation and time domain resource assignment may be interchangeably interpreted.

(Radio Communication Method)

In each of the embodiments, at least one of a Rel-16 type 2 CSI report, a Rel-16 type 2 port selection CSI report, and a Rel-17 type 2 port selection CSI report described above may be regarded as single-TRP CSI.

In each of the embodiments, X TRPs and x-TRP may be interchangeably interpreted. In each of the embodiments, CJT using X TRPs and x-TRP CJT may be interchangeably interpreted.

In each of the embodiments, reference CSI, CSI for a reference TRP, and CSI reported first may be interchangeably interpreted. In each of the embodiments, a reference TRP, CSI corresponding to reference CSI, a TRP corresponding to CSI reported first, and a CSI-RS resource / CMR / CMR group / CSI-RS resource set corresponding to CSI reported first may be interchangeably interpreted.

In each of the embodiments, inter-TRP, inter-TRP difference, and inter-TRP comparison may be interchangeably interpreted.

In each of the embodiments, an inter-TRP phase index and an inter-TRP phasing index may be interchangeably interpreted. In each of the embodiments, an inter-TRP index and an inter-TRP coefficient index may be interchangeably interpreted.

In each of the embodiments, an inter-TRP phase matrix and an inter-TRP phasing matrix may be interchangeably interpreted. In each of the embodiments, an inter-TRP matrix and an inter-TRP coefficient may be interchangeably interpreted.

In each of the embodiments, an inter-TRP phase codebook and an inter-TRP phasing codebook may be interchangeably interpreted. In each of the embodiments, an inter-TRP codebook and an inter-TRP coefficient codebook may be interchangeably interpreted.

In each of the embodiments, a target resource, a CMR, a CSI-RS resource, an NZP-CSI-RS resource, a CMR group, a CSI-RS resource set, an NZP-CSI-RS resource set, and a TRP may be interchangeably interpreted.

In each of the embodiments, an inter-TRP codebook and a plurality of panel codebooks for type 2 codebook may be interchangeably interpreted.

In each of the embodiments, operation of inter-TRP codebook reporting may be similar to operation of inter-panel codebook reporting.

<First Embodiment>

This embodiment relates to CMR.

In a case where a new parameter indicating a codebook type is configured (for example, codebook-Type = TypeII-CJT-r18 or TypeII-PortSelection-CJT-r18), new CJT CSI feedback based on existing type 2 / type 2 port selection may be configured. A new UE capability for each new codebook type for CJT may be defined.

Configuration/indication of CMR may follow any one of options 1-1 to 1-3 below.

<<Option 1-1>>

The number of TRPs (number of pieces of CJT CSI) may be explicitly configured as X or may be implicitly indicated by using the number of target resources (CMRs (CSI-RS resources / CMR groups / CSI-RS resource sets)) in a CSI report configuration (CSI-ReportConfig). A new UE capability may be defined for X. For example, X is an integer and may be up to four, may be two, three, or four, or may be greater than four.

In CSI-ReportConfig for CJT CSI feedback, up to X target resources (CMRs (CSI-RS resources) / CMR groups / CSI-RS resource sets) may be configured for the first resource setting for channel measurement. Each of the target resources (CMRs (CSI-RS resources) / CMR groups / CSI-RS resource sets) may correspond to one TRP.

It is preferable to use X CSI-RS resources. An additional bitmap for indicating CMRs to combine from among the X CMR groups / CSI-RS resource sets for the X CMR groups / CSI-RS resource sets is needed.

One CMR from the X CMRs may be measured and reported as reference CSI by a UE. For example, the first CRI/CSI in a mapping order may be regarded as reference CSI. A different CMR may be measured in consideration of an inter-TRP difference based on the reference CSI.

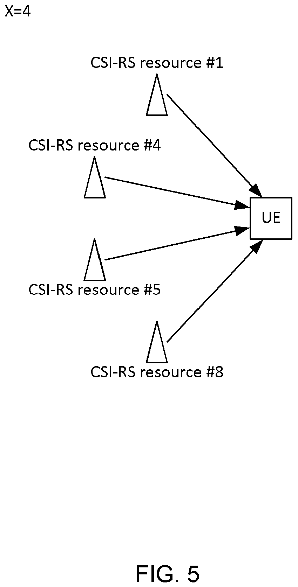

In the example in FIG. 5, X is four (X = 4). For the four TRPs, four respective CMRs (CSI-RS resources #1, #4, #5, and #8) are configured.

{Variations}

To consider selection of different x-TRPs (X TRPs), up to (N * X) CMRs may be configured. Here, the X CMRs may correspond to the X respective TRPs for CJT CSI. An N combination(s) of the x-TRPs may be measured and selected for CJT CSI by a UE. A new UE capability may be defined for N. For example, N may be one or two.

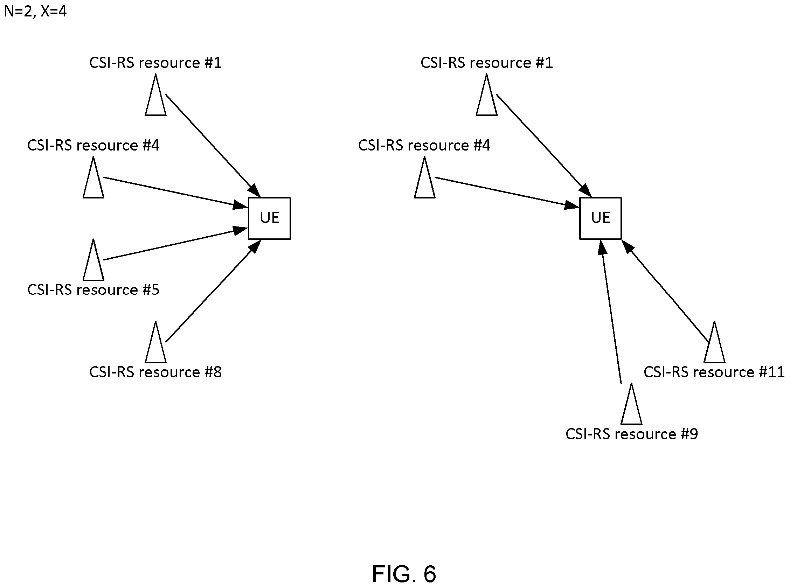

In the example in FIG. 6, N is two (N = 2), and X is four (X = 4). A combination of four CMRs (CSI-RS resources #1, #4, #5, and #8) and another combination of four CMRs (CSI-RS resources #1, #4, #9, and #11) are configured.

<<Option 1-2>>

For CJT CSI, up to X CSI report configurations (CSI-ReportConfig) may be configured and associated. Here, each CSI-ReportConfig may correspond to one TRP. For each CSI-ReportConfig, up to N CMRs may be configured. For example, N may be one or may be two or greater.

Configuration/indication of CMR may follow either one of options 1-2-1 and 1-2-2 below.

{Option 1-2-1}

One of X CSI-ReportConfigs may be configured as reference CSI-ReportConfig, and the (X - 1) other CSI-ReportConfigs may be associated with the reference CSI-ReportConfig.

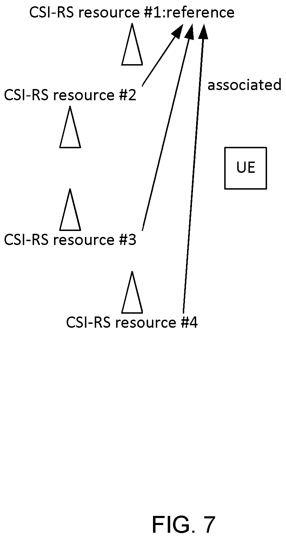

In the example in FIG. 7, for each of four TRPs, four CSI-ReportConfigs (#1, #2, #3, and #4) are configured. CSI-ReportConfig #1 is configured as reference CSI-ReportConfig, and CSI-ReportConfigs #2, #3, and #4 are associated with CSI-ReportConfig #1.

{Option 1-2-2}

One CMR from one CSI-ReportConfig from the X CSI-ReportConfigs may be selected, and CSI based on the CMR may be reported as reference CSI. A different CMR from a different one of the CSI-ReportConfigs may be measured in consideration of an inter-TRP difference based on the reference CSI. Only one CMR can be configured for CJT CSI in each CSI-ReportConfig, and 1-bit indicator of the reference CSI may be reported for each CSI-ReportConfig. The 1-bit indicator may indicate whether the corresponding CSI is reference CSI.

In option 1-1 described above, one CSI-ReportConfig may be associated with a plurality of TRPs. One CSI-RS (CSI-RS) (CSI-RS resource / CMR) may be associated with one TRP. In option 1-2 described above, one CSI-ReportConfig may be associated with one TRP.

<<Option 1-3>>

In a CSI report configuration (CSI-ReportConfig) for CJT CSI feedback, one or more N-port CSI-RS resources may be configured for CJT CSI measurement. Here, one or more ports from the N ports may correspond to one TRP. Part of the N ports may correspond to one TRP, and the other port(s) may correspond to a different TRP. N may be equal to or greater than X ($N \geq X$).

For example, if one N-port CSI-RS resource is configured, a UE may measure all the N ports and report one piece of CSI. For example, the UE may assume that each of the ports is transmitted by a plurality of TRPs and measure all the N ports. In this case, enhancement of CSI is not needed (TRPs are not recognized by (are transparent for) the UE), but the CSI-RS resource is transmitted not by one TRP but by the plurality of TRPs. Hence, a new QCL type for the CSI-RS resource may be needed.

According to this embodiment, a UE can be appropriately configured with a CMR for CJT CSI feedback.

<Second Embodiment>

This embodiment relates to IMR.

It may be assumed that there is no inter-TRP interference for CJT. There may be only interference other than interference by X TRPs (interference by one(s) other than the X TRPs).

In a CSI report configuration (CSI-ReportConfig) for CJT CSI feedback, the same IMR (ZP CSI-RS resource) may be configured for CMRs from the X TRPs. Based on the IMR, interference by one(s) other than the X TRPs may be measured.

Configuration/indication of IMR may follow either one of options 2-A and 2-B below.

{Option 2-A}

For X CMRs, only one IMR may be configured in the second resource setting. A UE may assume that the IMR is applied to all the CMRs.

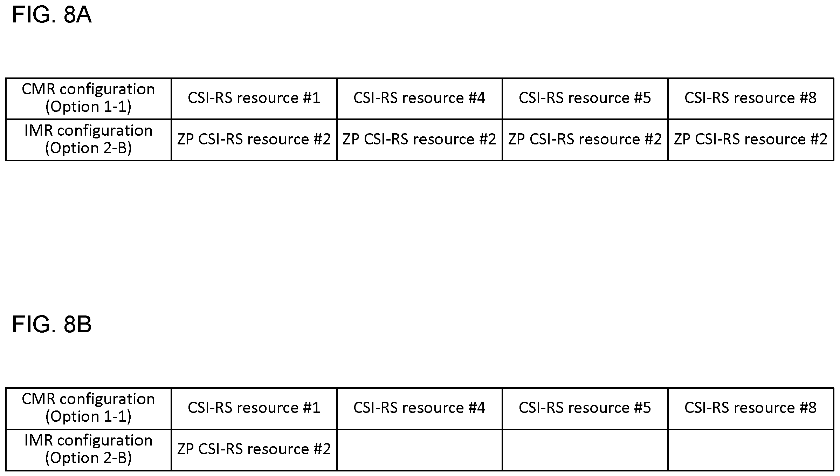

In the example in FIG. 8A, by following option 1-1 described above, four CMRs (CSI-RS resources #1, #4, #5, and #8) are configured in CSI-ReportConfig. Further, in the CSI-ReportConfig, one IMR (ZP CSI-RS resource #2) is configured in the second resource setting for one CMR. The UE applies the one IMR to the four CMRs.

{Option 2-B}

One-to-one CMR-IMR mapping configuration framework is maintained, but the same IMR resource may be configured for each CMR in the second resource setting. The UE may assume that the same IMR resource is configured for each CMR in the second resource setting. This may correspond to the CMR in the first resource setting.

In the example in FIG. 8B, by following option 1-1 described above, four CMRs (CSI-RS resources #1, #4, #5, and #8) are configured in CSI-ReportConfig. Further, in the CSI-ReportConfig, the same IMR (ZP CSI-RS resource #2) is configured in the second resource setting for each CMR. The UE applies the corresponding IMR to each CMR.

According to this embodiment, a UE can be appropriately configured with an IMR for CJT CSI feedback.

<Third Embodiment>

This embodiment relates to codebook/CSI.

In option 1-1 described above, when CMRs of X TRPs are configured in one CSI-ReportConfig, CSI in one CSI report may follow any one of options 3-A to 3-D below.

<<Option 3-A>>

The CSI report may include at least one of the following pieces of CJT CSI. The number of pieces of CJT CSI may be less than four or more than five.

- The first CJT CSI may include existing single-TRP CSI and a CRI for the first TRP / CMR / CSI-RS resource / CMR group / CSI-RS resource set.
- The second CJT CSI may include existing single-TRP CSI and a CRI for the second TRP / CMR / CSI-RS resource / CMR group / CSI-RS resource set and include at least one index of an inter-TRP phasing index from an inter-TRP phasing matrix, an inter-TRP amplitude index from an inter-TRP amplitude matrix, and a single inter-TRP coefficient index from an inter-TRP coefficient matrix. The index may be an index based on comparison with the first CJT CSI.

- The third CJT CSI may include existing single-TRP CSI and a CRI for the third TRP / CMR / CSI-RS resource / CMR group / CSI-RS resource set and include at least one index of an inter-TRP phasing index from an inter-TRP phasing matrix, an inter-TRP amplitude index from an inter-TRP amplitude matrix, and a single inter-TRP coefficient index from an inter-TRP coefficient matrix. The index may be an index based on comparison with the first CJT CSI.
- The fourth CJT CSI may include existing single-TRP CSI and a CRI for the fourth TRP / CMR / CSI-RS resource / CMR group / CSI-RS resource set and include at least one index of an inter-TRP phasing index from an inter-TRP phasing matrix, an inter-TRP amplitude index from an inter-TRP amplitude matrix, and a single inter-TRP coefficient index from an inter-TRP coefficient matrix. The index may be an index based on comparison with the first CJT CSI.

The i-th (i ≥ 2) CJT CSI may include an index based on comparison between the first CJT CSI and the i-th CJT CSI.

The CRI index of the first CJT CSI may be selected from among the X CMRs by a UE and reported by using a bit size of log2(X). The CRI index may be reference CSI with the best channel condition.

By using this CSI, a base station can update 2-TRP, 3-TRP, or 4-TRP CJT CSI with a reference TRP, for dynamic scheduling.

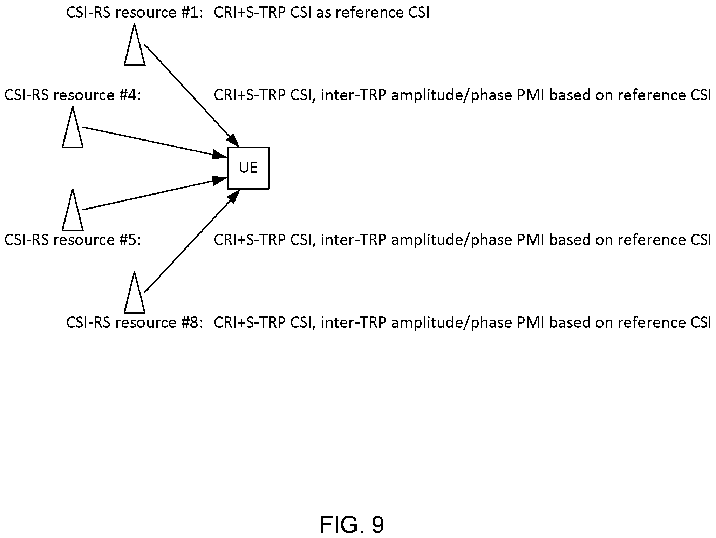

In the example in FIG. 9, by following option 1-1 described above, four CMRs (CSI-RS resources #1, #4, #5, and #8) are configured in CSI-ReportConfig. A CSI report includes the first to fourth pieces of CJT CSI. The first CJT CSI includes a CRI based on CSI-RS resource #1 and single-TRP CSI as reference CSI. The second CJT CSI includes a CRI and single-TRP CSI based on CSI-RS resource #4 and inter-TRP amplitude/phasing index based on the reference CSI (single-TRP CSI of CSI-RS resource #1). The third CJT CSI includes a CRI and single-TRP CSI based on CSI-RS resource #5 and an inter-TRP amplitude/phasing index based on the reference CSI (single-TRP CSI of CSI-RS resource #1). The fourth CJT CSI includes a CRI and single-TRP CSI based on CSI-RS resource #8 and inter-TRP amplitude/-phasing index based on the reference CSI (single-TRP CSI of CSI-RS resource #1).

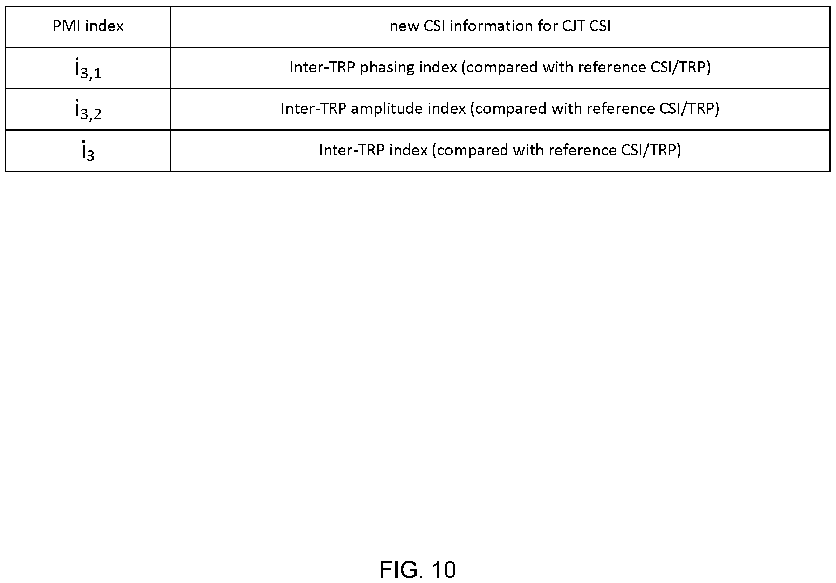

FIG. 10 shows an example of a new codebook for at least one of an inter-TRP phasing index, an inter-TRP amplitude index, and an inter-TRP coefficient index (including both amplitude and phase). PMI index $i_{3,1}$ indicates an inter-TRP phasing index (compared with reference CSI/TRP) as new CSI information for CJT CSI. PMI index $i_{3,2}$ indicates an inter-TRP amplitude index (compared with reference CSI/TRP) as new CSI information for CJT CSI. PMI index $i_3$ indicates an inter-TRP coefficient index (compared with reference CSI/TRP) as new CSI information for CJT

CSI.

<<Option 3-B>>

The CSI report may include at least one of the following pieces of CJT CSI. The number of pieces of CJT CSI may be less than four or more than five.

- The first CJT CSI may include existing single-TRP CSI and a CRI for the first TRP / CMR / CSI-RS resource / CMR group / CSI-RS resource set.
- The second CJT CSI may include existing single-TRP CSI and a CRI for the second TRP / CMR / CSI-RS resource / CMR group / CSI-RS resource set and include at least one index of an inter-TRP phasing index from an inter-TRP phasing matrix, an inter-TRP amplitude index from an inter-TRP amplitude matrix, and a single inter-TRP coefficient index from an inter-TRP coefficient matrix. The index may be an index based on comparison with the first CJT CSI.
- The third CJT CSI may include existing single-TRP CSI and a CRI for the third TRP / CMR / CSI-RS resource / CMR group / CSI-RS resource set and include at least one index of an inter-TRP phasing index from an inter-TRP phasing matrix, an inter-TRP amplitude index from an inter-TRP amplitude matrix, and a single inter-TRP coefficient index from an inter-TRP coefficient matrix. The index may be at least one of an index based on comparison with the first CJT CSI and an index based on comparison with the second CJT CSI.
- The fourth CJT CSI may include existing single-TRP CSI and a CRI for the fourth TRP / CMR / CSI-RS resource / CMR group / CSI-RS resource set and include at least one index of an inter-TRP phasing index from an inter-TRP phasing matrix, an inter-TRP amplitude index from an inter-TRP amplitude matrix, and a single inter-TRP coefficient index from an inter-TRP coefficient matrix. The index may be at least one of an index based on comparison with the first CJT CSI, an index based on comparison with the second CJT CSI, and an index based on comparison with the third CJT CSI.

The i-th (i ≥ 2) CJT CSI may include an index based on comparison between the first CJT CSI to the (i-1)-th CJT CSI.

The CRI index of the first CJT CSI may be selected from among the X CMRs by the UE and reported by using a bit size of log2(X). The CRI index may be reference CSI with the best channel condition. The CRI index of the second CJT CSI may be the second-best CSI. The CRI index of the third CJT CSI may be the third-best CSI. The CRI index of the fourth CJT CSI may be the fourth-best CSI.

In comparison with option 3-A, in option 3-B, a base station can update any 2-TRP, 3-TRP, or 4-TRP CJT CSI with a reference TRP, for dynamic scheduling.

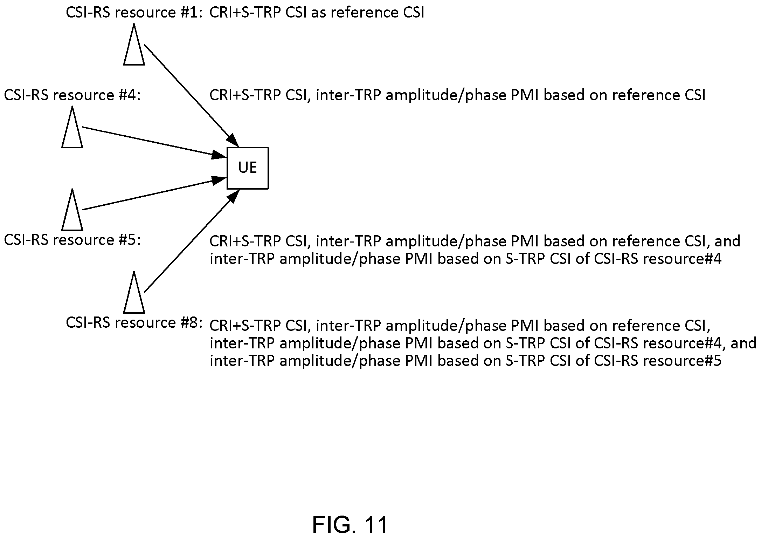

In the example in FIG. 11, by following option 1-1 described above, four CMRs (CSI-RS resources #1, #4, #5, and #8) are configured in CSI-ReportConfig. A CSI report includes the first to fourth pieces of CJT CSI. The first CJT CSI includes a CRI based on CSI-RS resource #1 and single-TRP CSI as reference CSI. The second CJT CSI includes a CRI and single-TRP CSI based on CSI-RS resource #4 and inter-TRP amplitude/phasing index based on the reference CSI (single-TRP CSI of CSI-RS resource #1). The third CJT CSI includes a CRI and single-TRP CSI based on CSI-RS resource #5, an inter-TRP amplitude/phasing index based on the reference CSI (single-TRP CSI of CSI-RS resource #1), and an inter-TRP amplitude/phasing index based on single-TRP CSI of CSI-RS resource #4. The fourth CJT CSI includes a CRI and single-TRP CSI based on CSI-RS resource #8, an inter-TRP amplitude/-phasing index based on the reference CSI (single-TRP CSI of CSI-RS resource #1), an inter-TRP amplitude/-phasing index based on single-TRP CSI of CSI-RS resource #4, and an inter-TRP amplitude/phasing index based on single-TRP CSI of CSI-RS resource #5.

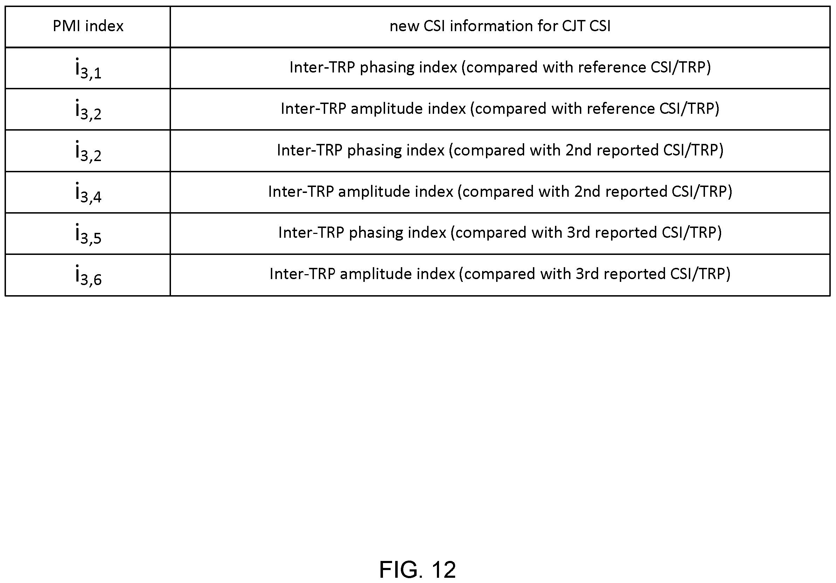

FIG. 12 shows an example of a new codebook for at least one of an inter-TRP phasing index, an inter-TRP amplitude index, and an inter-TRP coefficient index (including both amplitude and phase). PMI index $i_{3,1}$ indicates an inter-TRP phasing index (compared with reference CSI/TRP) as new CSI information for CJT CSI. PMI index $i_{3,2}$ indicates an inter-TRP amplitude index (compared with reference CSI/TRP) as new CSI information for CJT CSI. PMI index $i_{3,3}$ indicates an inter-TRP phasing index (compared with CSI/TRP reported second) as new CSI information for CJT CSI. PMI index $i_{3,4}$ indicates an inter-TRP amplitude index (compared with CSI/TRP reported second) as new CSI information for CJT CSI. PMI index $i_{3,5}$ indicates an inter-TRP phasing index (compared with CSI/TRP reported third) as new CSI information for CJT CSI. PMI index $i_{3,6}$ indicates an inter-TRP amplitude index (compared with CSI/TRP reported third) as new CSI information for CJT CSI.

<<Option 3-C>>

Based on option 3-A/3-B described above, at least one of the following additional contents may be reported for the second/third/fourth CJT content. The number of pieces of CJT CSI may be less than four or more than five.

- The second CJT CSI may further include a CQI (2-TRP CQI) assuming 2-TRP CJT of the CRI in the first CJT CSI and the CRI in the second CJT CSI (CMR for the first CJT CSI and CMR for the second CJT CSI).
- The third CJT CSI may further include at least one of a CQI assuming 2-TRP CJT of the CRI in the first CJT CSI and the CRI in the third CJT CSI (CMR for the first CJT CSI and CMR for the third CJT CSI) and a CQI assuming 3-TRP CJT (3-TRP CQI) of the CRI in the first CJT CSI, the CRI in the second CJT CSI, and the CRI in the third CJT CSI (CMR for the first CJT CSI, CMR for the second CJT CSI, and CMR for the third CJT CSI).

- The fourth CJT CSI may further include at least one of a CQI assuming 2-TRP CJT of the CRI in the first CJT CSI and the CRI in the fourth CJT CSI (CMR for the first CJT CSI, CMR for the fourth CJT CSI, and CMR for the second CJT CSI) and a CQI assuming 4-TRP CJT (4-TRP CQI) of the CRI in the first CJT CSI, the CRI in the second CJT CSI, the CRI in the third CJT CSI, and the CRI in the fourth CJT CSI (CMR for the first CJT CSI, CMR for the second CJT CSI, CMR for the third CJT CSI, and CMR for the fourth CJT CSI).

The i-th (i ≥ 2) CJT CSI may include a CQI assuming the first to i-th i-TRP CJTs.

New CQI (x-TRP CQI) reporting for at least one of 2-TRP CJT (with one TRP being reference TRP/CSI), 3-TRP CJT (with one TRP being reference TRP/CSI), and 4-TRP CJT (with one TRP being reference TRP/CSI) may be defined.

Whether or not the new x-TRP CQI is reported in x-TRP CJT CSI may be configured in an RRC IE (CSI-ReportConfig).

{Variations}

Instead of an additional new x-TRP CQI being reported, an existing single-TRP CQI may be reported in each CJT CSI. x-TRP CJT may be CJT including CMRs/TRPs reported in the i-th CJT CSI and therebefore. For example, 4-TRP CJT may be CJT including CMRs/TRPs reported in the i-th CJT CSI and therebefore.

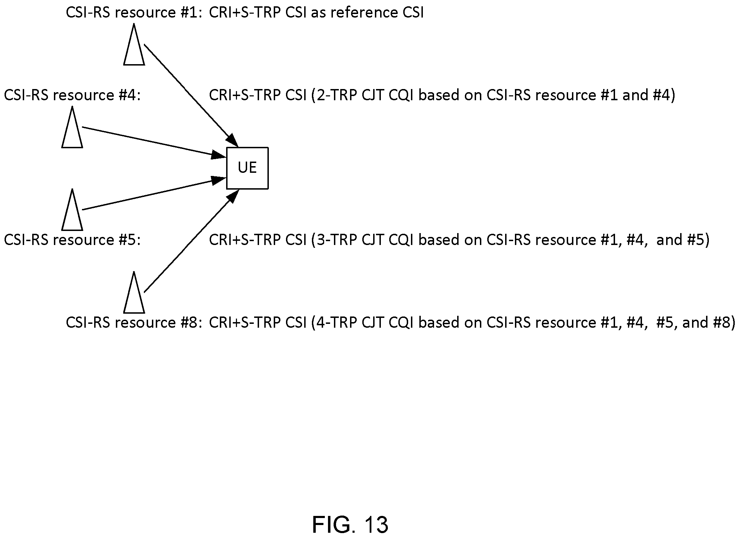

In the example in FIG. 13, by following option 1-1 described above, four CMRs (CSI-RS resources #1, #4, #5, and #8) are configured in CSI-ReportConfig. A CSI report includes the first to fourth pieces of CJT CSI. The first CJT CSI includes a CRI based on CSI-RS resource #1 and single-TRP CSI as reference CSI. The second CJT CSI may include a CRI and single-TRP CSI based on CSI-RS resource #4, and a single-TRP CQI may be replaced with a 2-TRP CQI (based on CSI-RS resources #1 and #4). The third CJT CSI may include a CRI and single-TRP CSI based on CSI-RS resource #5, and a single-TRP CQI may be replaced with a 3-TRP CQI (based on CSI-RS resources #1, #4, and #5). The fourth CJT CSI may include a CRI and single-TRP CSI based on CSI-RS resource #8, and a single-TRP CQI may be replaced with a 4-TRP CQI (based on CSI-RS resources #1, #4, #5, and #8).

<<Option 3-D>>

Based on option 3-A/3-B described above, at least one of the following additional contents may be reported for the second/third/fourth CJT content. The number of pieces of CJT CSI may be less than four or more than five. The i-th CJT CSI, as the (i - 1)-th CJT CSI and therebefore, may be based on the (i - 1)-th CJT CSI.

- The second CJT CSI may further include a CQI (2-TRP CQI) assuming 2-TRP CJT of the CRI in the first CJT CSI and the CRI in the second CJT CSI (CMR for the first CJT CSI and CMR for the second CJT CSI).
- The third CJT CSI may further include at least one of a CQI assuming 2-TRP CJT of the CRI in the first CJT CSI and the CRI in the third CJT CSI (CMR for the first CJT CSI and CMR for the third CJT CSI), a CQI assuming 2-TRP CJT of the CRI in the second CJT CSI and the CRI in the third CJT CSI (CMR for the second CJT CSI and CMR for the third CJT CSI), and a CQI assuming 3-TRP CJT (3-TRP CQI) of the CRI in the first CJT CSI, the CRI in the second CJT CSI, and the CRI in the third CJT CSI (CMR for the first CJT CSI, CMR for the second CJT CSI, and CMR for the third CJT CSI).
- The fourth CJT CSI may further include at least one of a CQI assuming 2-TRP CJT of the CRI in the first CJT CSI and the CRI in the fourth CJT CSI (CMR for the first CJT CSI, CMR for the fourth CJT CSI, and CMR for the second CJT CSI), a CQI assuming 2-TRP CJT of the CRI in the second CJT CSI and the CRI in the fourth CJT CSI (CMR for the second CJT CSI, CMR for the fourth CJT CSI, and CMR for the second CJT CSI), a CQI assuming 2-TRP CJT of the CRI in the third CJT CSI and the CRI in the fourth CJT CSI (CMR for the third CJT CSI, CMR for the fourth CJT CSI, and CMR for the second CJT CSI), a CQI assuming 3-TRP CJT of the CRI in the first CJT CSI, the CRI in the second CJT CSI, and the CRI in the fourth CJT CSI (CMR for the first CJT CSI, CMR for the second CJT CSI, and CMR for the fourth CJT CSI), a CQI assuming 3-TRP CJT of the CRI in the first CJT CSI, the CRI in the third CJT CSI, and the CRI in the fourth CJT CSI (CMR for the first CJT CSI, CMR for the third CJT CSI, and CMR for the fourth CJT CSI), a CQI assuming 3-TRP CJT of the CRI in the second CJT CSI, the CRI in the third CJT CSI, and the CRI in the fourth CJT CSI (CMR for the second CJT CSI, CMR for the third CJT CSI, and CMR for the fourth CJT CSI), and a CQI assuming 4-TRP CJT (4-TRP CQI) of the CRI in the first CJT CSI, the CRI in the second CJT CSI, the CRI in the third CJT CSI, and the CRI in the fourth CJT CSI (CMR for the first CJT CSI, CMR for the second CJT CSI, CMR for the third CJT CSI, and CMR for the fourth CJT CSI).

The i-th (i ≥ 2) CJT CSI may include a CQI assuming j-TRP CJT (2 ≤ j ≤ i) using at least two of the first to i-th pieces of CJT CSI.

New CQI (x-TRP CQI) reporting for at least one of 2-TRP CJT (with/without indication of two TRPs), 3-TRP CJT (with/without indication of three TRPs), and 4-TRP CJT may be defined.

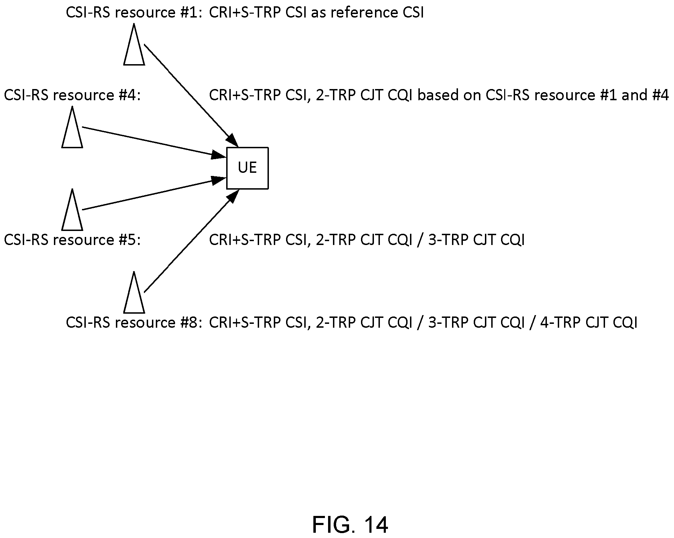

In the example in FIG. 14, by following option 1-1 described above, four CMRs (CSI-RS resources #1, #4, #5, and #8) are configured in CSI-ReportConfig. A CSI report includes the first to fourth pieces of CJT CSI. The first CJT CSI includes a CRI based on CSI-RS resource #1 and single-TRP CSI as reference CSI. The second CJT CSI includes a CRI and single-TRP CSI based on CSI-RS resource #4 and a 2-TRP CQI (based on CSI-RS resources #1 and #4). The third CJT CSI includes a CRI and a single-TRP CSI based on CSI-RS resource #5 and a 2-TRP CQI / 3-TRP CQI. The fourth CJT CSI includes a CRI and single-TRP CSI based on CSI-RS resource #8 and a 2-TRP CQI / 3-TRP CQI / 4-TRP CQI.

Whether or not the new x-TRP CQI is reported in x-TRP CJT CSI may be configured in an RRC IE (CSI-ReportConfig).

In option 1-2 described above, one CSI report may correspond to each CSI-ReportConfig for associated X CSI-ReportConfigs. In this case, option 3-A/3-B/3-C/3-D may be applied with the following difference.

- The first/second/third/fourth CJT CSI content in option 3-A/3-B/3-C/3-D may be reported in respective separate CSI reports for the corresponding CSI-ReportConfigs. In this case, no CRI report may be needed in each CSI report.
- In each CSI report, a reference CSI indicator may be explicitly indicated with a new content of one CJT CSI. For a CSI report with a reference CSI indicator being true/yes (= true/yes), the content of the first CJT CSI may be reported. For a different CSI report with a reference CSI indicator being falth/no (= falth/no), the content of the second/third/fourth CJT CSI may be reported.

According to this embodiment, a UE can appropriately report CJT CSI.

<Fourth Embodiment>

This embodiment relates to codebook/CSI-/quantization.

A new codebook table (quantization table) for a new report content in the third embodiment may be defined.

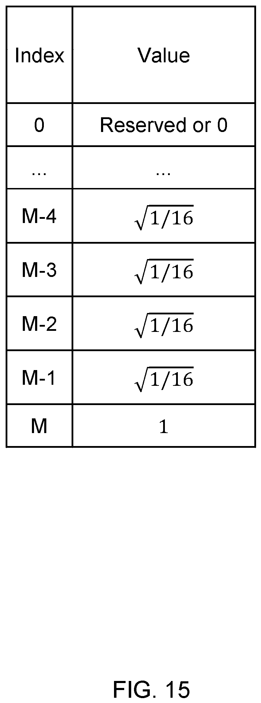

For an inter-TRP amplitude codebook, a new table may be defined, or an existing table (for example, FIG. 1 / FIG. 2) may be reused. FIG. 15 shows an example of a new table for an inter-TRP amplitude codebook. For example, in a case of M = 3, 2 bits are used for display/reporting, to be able to display/report four values. For example, in a case of M = 4, 3 bits are used for display/reporting, to be able to display/report eight values.

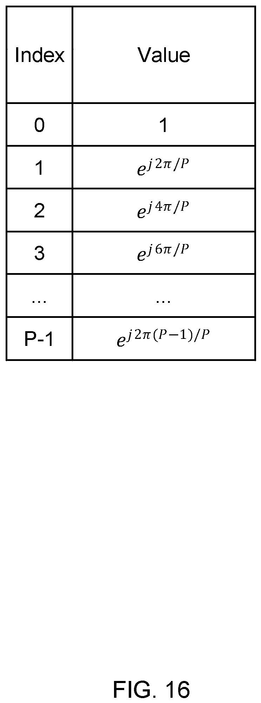

For an inter-TRP phase codebook, a new table may be defined, or an existing table (for example, FIG. 1 / FIG. 2) may be reused. FIG. 16 shows an example of a new table for an inter-TRP phase codebook. For example, in a case of P = 4, 2 bits are used for display/reporting, to be able to display/report four values. For example, in a case of P = 8, 3 bits are used for display/reporting, to be able to display/report eight values. For displaying/reporting of a phase, the range [0, $2\pi$] may be divided into P parts ($\phi_{l,i}$ = exp (j$2\pi c_i$/P) , $c_i \in$ {0, ..., P - 1}).

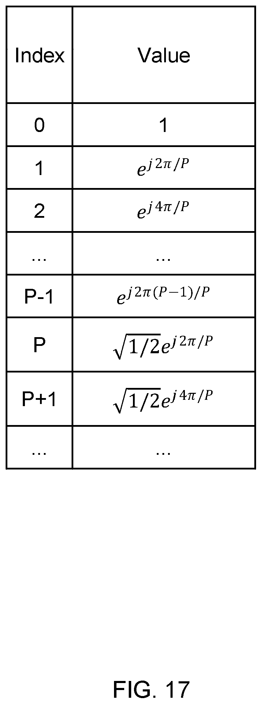

For an inter-TRP coefficient codebook (inter-TRP codebook), a new table may be defined. FIG. 17 shows an example of a new table for an inter-TRP coefficient codebook. Each value may include both amplitude and phase.

According to this embodiment, a UE can appropriately quantize CJT CSI.

<Fifth Embodiment>

This embodiment relates to CSI part 1/2 and a mapping order.

In option 1-1 described above, a separation between CSI part 1 and CSI part 2 may be defined for a new CJT CSI report for one TRP for one CSI-Report-Config.

An x-TRP CQI may be included in either one of CSI part 1 and CSI part 2.

A new mapping order table of one or more CSI fields of one CSI report for CSI part 1 and a new mapping order table of one or more CSI fields of one CSI report for CSI part 2 may be defined. For example, a CRI may be at the beginning of part 1. An inter-TRP coefficient (phase/amplitude) index may be at the end of part 2.

The mapping order of one or more CSI fields in CSI part 1 for CJT CSI for one TRP may be as follows.

- CRI (if reported)
- reference CSI indicator (if reported)
- rank indicator (RI)
- channel quality indicator (CQI) (single-TRP CQI or x-TRP CQI based on a configuration)
- the number of non-zero amplitude coefficients

This CSI part 1 may have a fixed payload size.

The mapping order of one or more CSI fields in CSI part 2 for CJT CSI for one TRP may be as follows.

- over-sampling factor
- a plurality of indices of 2D-DFT bases
- index $M_{initial}$ of the initial DFT base of a selected DFT window
- selected DFT base of each layer
- bitmap of each layer
- non-zero LC coefficients (phase and amplitude) of each layer
- strongest coefficient indicator of each layer
- amplitude of the strongest coefficient of each layer / each polarized wave

- inter-TRP amplitude index of each layer (each polarized wave) (if reported)
- inter-TRP phasing index of each layer (each polarized wave) (if reported)
- inter-TRP coefficient index of each layer (each polarized wave) (if reported)
- additional x-TRP CQI (if reported) (which may be in CSI part 1)

The first/second/third/fourth CJT CSI content may be in one CSI report.

The CSI report may follow either one of options 5-1 and 5-2 below.

{Option 5-1}

CSI part 1 for each of the first /second/third/- fourth CJT CSI may include the content of "one CSI part 1 for CJT CSI for one TRP" described above. CSI part 2 for each of the first /second/third/fourth CJT CSI may include the content of "one CSI part 2 for CJT CSI for one TRP" described above.

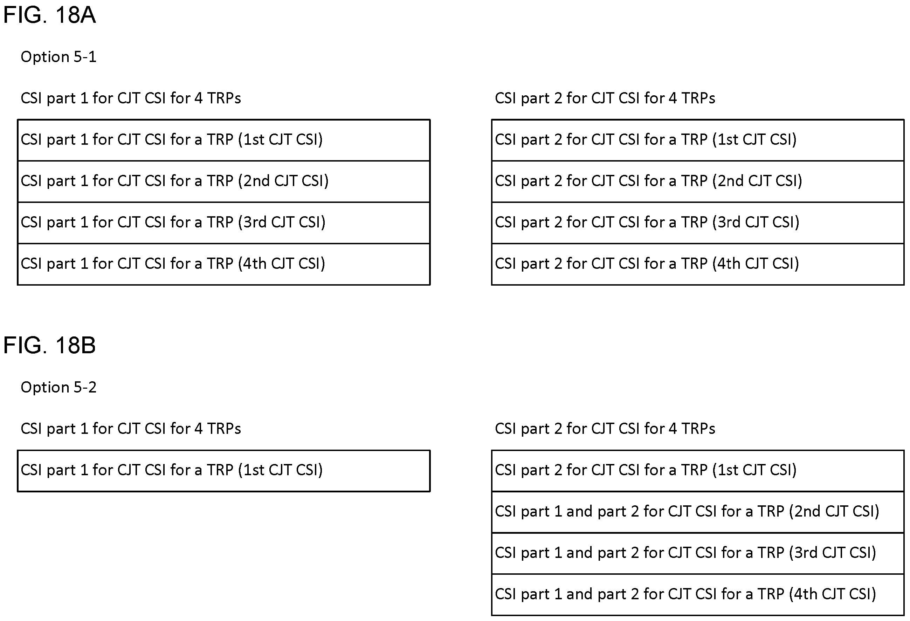

FIG. 18A shows an example of CSI parts 1 and 2 for 4-TRP CJT CSI. According to "one CSI part 1 for CJT CSI for one TRP" described above, CSI part 1 for the first TRP (CJT CSI), CSI part 1 for the second TRP (CJT CSI), CSI part 1 for the third TRP (CJT CSI), and CSI part 1 for the fourth TRP (CJT CSI) are reported. According to "one CSI part 2 for CJT CSI for one TRP" described above, CSI part 2 for the first TRP (CJT CSI), CSI part 2 for the second TRP (CJT CSI), CSI part 2 for the third TRP (CJT CSI), and CSI part 2 for the fourth TRP (CJT CSI) are reported.

{Option 5-2}

CSI part 1 may include the content of "one CSI part 1 for CJT CSI for one TRP" described above for reference (first) CJT CSI. CSI part 2 may include a different content.

FIG. 18B shows an example of CSI parts 1 and 2 for 4-TRP CJT CSI. According to "one CSI part 1 for CJT CSI for one TRP" described above, CSI part 1 for the first TRP (CJT CSI) is reported. According to "one CSI part 2 for CJT CSI for one TRP" described above, CSI part 2 for the first TRP (CJT CSI) is reported. According to "one CSI part 1 for CJT CSI for one TRP" and "one CSI part 2 for CJT CSI for one TRP" described above, CSI parts 1 and 2 for the second TRP (CJT CSI), CSI parts 1 and 2 for the third TRP (CJT CSI), and CSI parts 1 and 2 for the fourth TRP (CJT CSI) are reported.

In a new mapping order table of one or more CSI fields of one CSI report for CSI part 1/2, CSIs may be arranged in the order of TRPs (first CJT CSI, second CJT CSI, third CJT CSI, and fourth CJT CSI).

According to this embodiment, a UE can appropriately report CJT CSI.

<Sixth Embodiment>

This embodiment relates to CSI part 2.

For "one CSI part 2 for CJT CSI for one TRP" described above, grouping of CSI part 2 (based on group 0/1/2 described above) may follow either one of options 6-1 and 6-2 below.

{Option 6-1}

A new inter-TRP amplitude/phasing/coefficient index may be arranged in group 2.

For example, group 2 described above may be changed as follows.

- Group 2: floor($K^{NZ}/2$) lowest (low order) priority element(s) in $i_{1,7,l}$, floor($K^{NZ}/2$) lowest (low order) priority element(s) in $i_{2,4,l}$, floor($K^{NZ}/2$) lowest (low order) priority element (s) in $i_{2,5,l}$ (1 = 1, ..., v), and inter-TRP amplitude/phasing/coefficient index of each layer

{Option 6-2}

New group 3 may be introduced. A new inter-TRP amplitude/phasing/coefficient index may be arranged in group 3. In CSI omission, group 3 may have a lower priority than that of group 2.

For example, group 3 below may be defined in addition to groups 0 to 2 described above.

- Group 3: inter-TRP amplitude/phasing/coefficient index of each layer

When an x-TRP CQI is in CSI part 2, the x-TRP CQI may be arranged in group 0 or 1 having a higher priority.

In "CSI parts 1 and 2 for 4-TRP CJT CSI" in option 5-2 described above, the original content of CSI part 1 for CJT CSI (second/third/fourth CJT CSI) for one TRP is in CSI part 2. The original content of CSI part 1 may be arranged in group 0 in CSI part 2.

If group 3 is introduced, a priority report level for part 2 CSI may be changed.

The relationship between the CSI part 2 priority and the CSI part 2 mapping order table may be as follows. $N_{Rep}$ may denote the number of CSI reports.

- Priority 0: for CSI reports 1 to $N_{Rep}$, group 0 CSI for a CSI report configured with 'typeII-r16,' 'typeII-PortSelection-r16,' or 'xx-CJT-r18'; part 2 wideband CSI for a CSI report configured with others
- Priority 1: group 1 CSI for CSI report 1 if configured with 'typeII-r16,' 'typeII-PortSelection-r16,' or 'xx-CJT-r18'; part 2 subband CSI of an even-numbered subband for CSI report 1 if configured with others
- Priority 2: group 2 CSI for CSI report 1 if configured with 'typeII-r16,' 'typeII-PortSelection-r16,' or 'xx-CJT-r18'; part 2 subband CSI of an odd-numbered subband for CSI report 1 if configured with others
- Priority 3: group 3 CSI for CSI report 1 if configured with 'typeII-r16,' 'typeII-PortSelection-r16,' or 'xx-CJT-r18'; part 2 subband CSI of an odd-numbered subband for CSI report 1 if configured with others
- Priority 4: group 1 CSI for CSI report 2 if configured with 'typeII-r16,' 'typeII-PortSelection-r16,' or 'xx-CJT-r18'; part 2 subband CSI of an even-numbered subband for CSI report 1 if configured with others
- Priority 5: group 2 CSI for CSI report 2 if configured with 'typeII-r16,' 'typeII-PortSelection-r16,' or 'xx-CJT-r18'; part 2 subband CSI of an odd-numbered subband for CSI report 1 if configured with others
- Priority 6: group 3 CSI for CSI report 2 if configured with 'typeII-r16,' 'typeII-PortSelection-r16,' or 'xx-CJT-r18'; part 2 subband CSI of an odd-numbered subband for CSI report 1 if configured with others
- Priority 7 and subsequent may be defined according to a similar rule to that for priorities 1 to 6

In Priorities 1 to 3, the mapping order of pieces of CSI from groups 1 to 3 for CSI report 1 if configured with "xx-CJT-r18" may follow either one of mapping orders 1 and 2 below.

{Mapping Order 1}

- Group 1 CSI for CSI report 1 for TRP of the first CJT CSI
- Group 1 CSI for CSI report 1 for TRP of the second CJT CSI
- Group 1 CSI for CSI report 1 for TRP of the third CJT CSI
- Group 1 CSI for CSI report 1 for TRP of the fourth CJT CSI
- Group 2 CSI for CSI report 1 for TRP of the first CJT CSI
- Group 2 CSI for CSI report 1 for TRP of the second CJT CSI
- Group 2 CSI for CSI report 1 for TRP of the third CJT CSI
- Group 2 CSI for CSI report 1 for TRP of the fourth CJT CSI
- Group 3 CSI for CSI report 1 for TRP of the first CJT CSI
- Group 3 CSI for CSI report 1 for TRP of the second CJT CSI
- Group 3 CSI for CSI report 1 for TRP of the third CJT CSI
- Group 3 CSI for CSI report 1 for TRP of the fourth CJT CSI

{Mapping Order 2}

- Group 1 CSI for CSI report 1 for TRP of the first CJT CSI
- Group 2 CSI for CSI report 1 for TRP of the first CJT CSI
- Group 3 CSI for CSI report 1 for TRP of the first CJT CSI
- Group 1 CSI for CSI report 1 for TRP of the second CJT CSI
- Group 2 CSI for CSI report 1 for TRP of the second CJT CSI
- Group 3 CSI for CSI report 1 for TRP of the second CJT CSI
- Group 1 CSI for CSI report 1 for TRP of the third CJT CSI
- Group 2 CSI for CSI report 1 for TRP of the third CJT CSI
- Group 3 CSI for CSI report 1 for TRP of the third CJT CSI
- Group 1 CSI for CSI report 1 for TRP of the fourth CJT CSI
- Group 2 CSI for CSI report 1 for TRP of the fourth CJT CSI
- Group 3 CSI for CSI report 1 for TRP of the fourth CJT CSI

According to this embodiment, a UE can appropriately report CJT CSI.

<Other Embodiments>

<<UE Capability Information / Higher Layer Parameter>>

A higher layer parameter (RRC IE) / UE capability corresponding to a function (characteristics, feature) in each of the above embodiments may be defined. The higher layer parameter may indicate whether to enable the function. The UE capability may indicate whether the UE supports the function.

The UE configured with the higher layer parameter corresponding to the function may perform the function. A "UE not configured with the higher layer parameter corresponding to the function does not perform the function (for example, follows Rel. 15/16) "may be defined.

A UE that has reported/transmitted a UE capability indicating support of the function may perform the function. A "UE that has not reported the UE capability indicating support of the function does not perform the function (for example, follows Rel. 15/16) "may be defined.

When the UE reports/transmits the UE capability indicating supporting of the function and is configured with the higher layer parameter corresponding to the function, the UE may perform the function. "When a UE does not report/transmit the UE capability indicating supporting of the function or is not configured with the higher layer parameter corresponding to the function, the UE does not perform the function (for example, follows Rel. 15/16) "may be defined.

Which embodiment/option/choice/function of the plurality of embodiments above is used may be configured by a higher layer parameter, may be reported by a UE as a UE capability, may be defined in a specification, or may be determined based on a reported UE capability and a higher layer parameter.

The UE capability may indicate whether the UE supports at least one of the following functions.

- Report of inter-TRP amplitude. One or more of a plurality of codebooks with different quantization granularities.
- Report of an inter-TRP phase. One or more of a plurality of codebooks with different quantization granularities.
- Report of inter-TRP coefficients (including both amplitude and phase). One or more of a plurality of codebooks with different quantization granularities.
- Report of a reference CSI indicator.
- Report of an x-TRP CQI (aggregated CJT CQI). Report of an x-TRP CQI instead of a single-TRP CQI. - Report of an x-TRP CQI in addition to a single-TRP CQI. Report of an x-TRP display such as an x-TRP CQI and the like.

The UE capability may indicate at least one of the following values.

- Value of x in x-TRP CJT. Maximum value of x in x-TRP CJT.

According to the UE capabilities/higher layer parameters described above, a UE can implement the above functions while maintaining compatibility with an existing specification.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

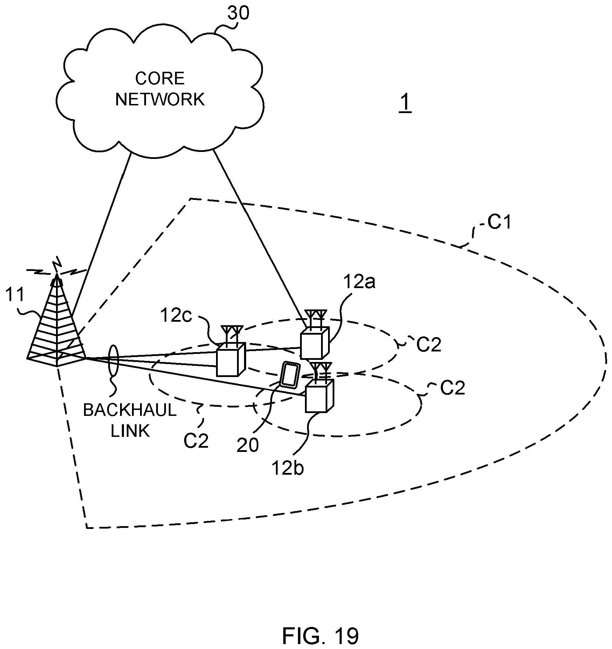

FIG. 19 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly.

For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, and 5G.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information, and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search for DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

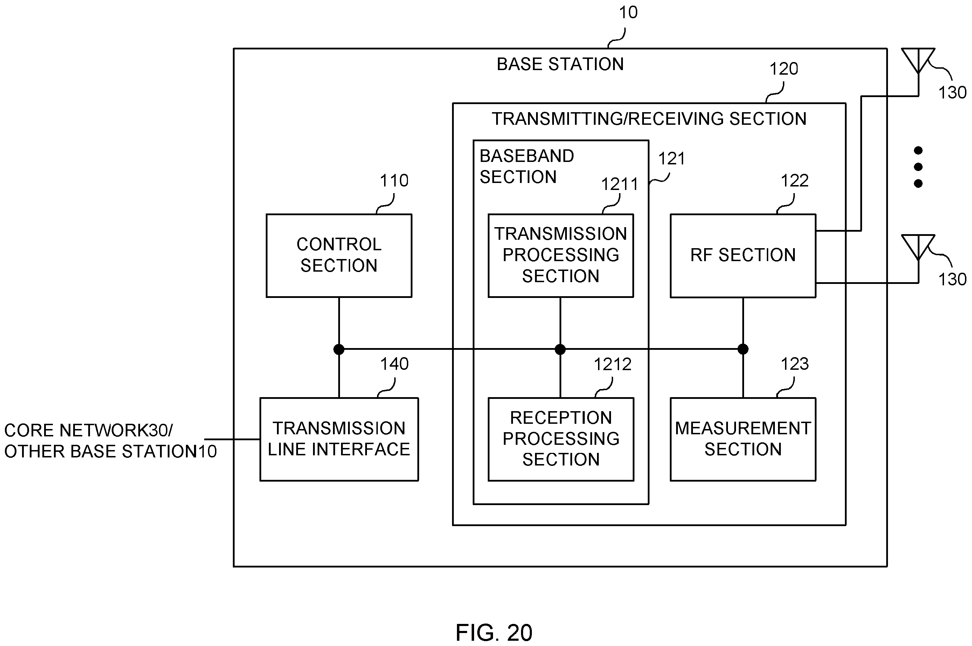

FIG. 20 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211 and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a configuration indicating X channel measurement resources for X transmission/reception points (TRPs) for coherent joint transmission. The control section 110 may control reception of a report of measurement of the X channel measurement resources, based on the configuration.

The transmitting/receiving section 120 may transmit a configuration indicating X channel measurement resources for X transmission/reception points (TRPs) for coherent joint transmission. The control section 110 may control reception of a channel state information (CSI) report including X pieces of CSI corresponding to the X respective channel measurement resources, based on the configuration.

The transmitting/receiving section 120 may transmit a configuration indicating X channel measurement resources for X transmission/reception points (TRPs) for coherent joint transmission. The control section 110 may control reception of a report of channel state information (CSI) part 1 and CSI part 2, based on the configuration.

(User Terminal)

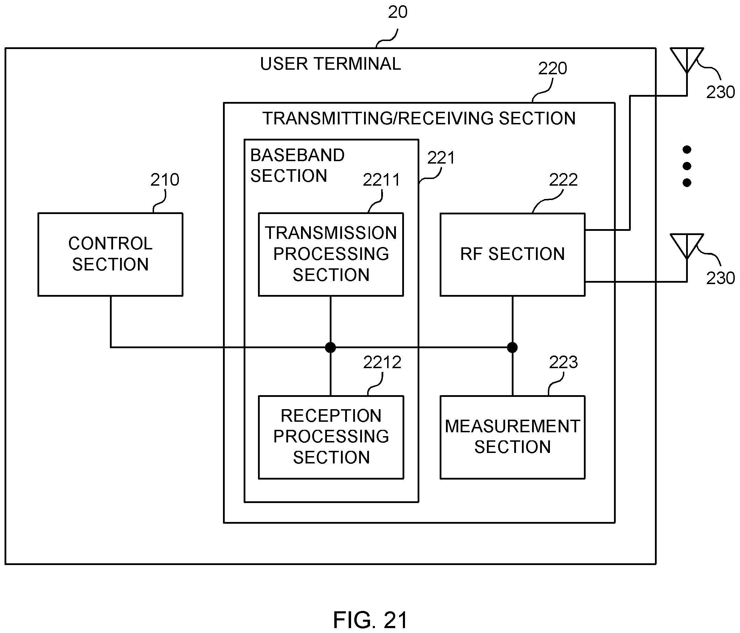

FIG. 21 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data, control information and so on acquired from the control section 210, and may generate a bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration indicating X channel measurement resources for X transmission/reception points (TRPs) for coherent joint transmission. The control section 210 may control reporting of measurement of the X channel measurement resources, based on the configuration.

The configuration may indicate at least one of X and X channel state information report configurations.

The configuration may indicate a plurality of channel state information reference signal ports.

The configuration may indicate one or X interference measurement resources.

The transmitting/receiving section 220 may receive a configuration indicating X channel measurement resources for X transmission/reception points (TRPs) for coherent joint transmission. The control section 210 may control channel state information (CSI) reporting including X pieces of CSI corresponding to the X respective channel measurement resources, based on the configuration.

Each of the X pieces of CSI may include a channel state information reference signal (CSI-RS) resource indicator (CRI) indicating a corresponding channel measurement resource and CSI based on the corresponding channel measurement resource.

Each of the X pieces of CSI may include an index indicating a difference in at least one of phase and amplitude between a plurality of TRPs.

i may be two or greater, and i-th CSI may include an index indicating a difference in at least one of phase and amplitude between at least two of first to (i - 1)-th channel measurement resources.

The transmitting/receiving section 220 may receive a configuration indicating X channel measurement resources for X transmission/reception points (TRPs) for coherent joint transmission. The control section 210 may control reporting of channel state information (CSI) part 1 and CSI part 2, based on the configuration.

The CSI part 1 for one of the X TRPs may include at least one of a channel state information reference signal (CSI-RS) resource indicator (CRI) indicating a corresponding channel measurement resource and a reference CSI indicator indicating one of the X channel measurement resources.

The CSI part 2 for one of the X TRPs may include at least one of an index indicating a difference in at least one of phase and amplitude between a plurality of TRPs and a channel quality indicator (CQI) based on the X TRPs, for at least one of a layer and a polarized wave.

The index may be included in group 2 among group 0 to the group 2, or group 3 subsequent to the group 2.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

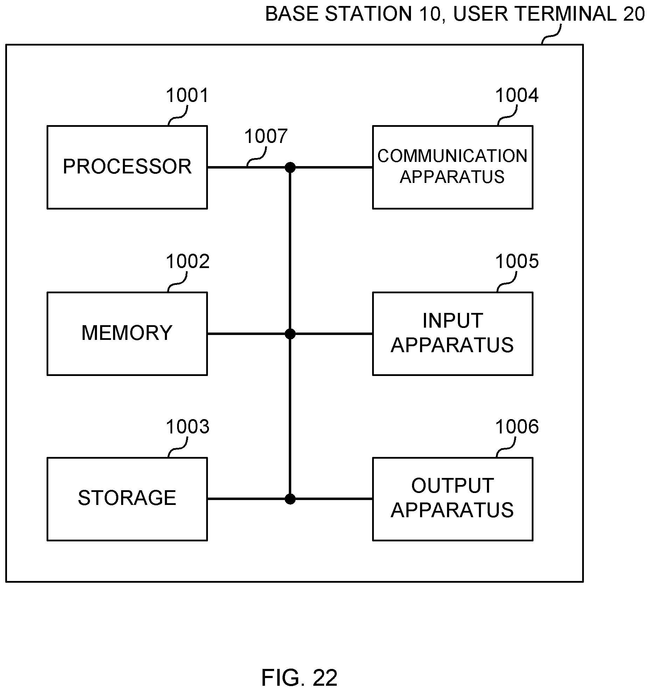

For example, a base station, a user terminal, and so on according to one embodiment of the present disclosure may function as a computer that executes the processes of the radio communication method of the present disclosure. FIG. 22 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

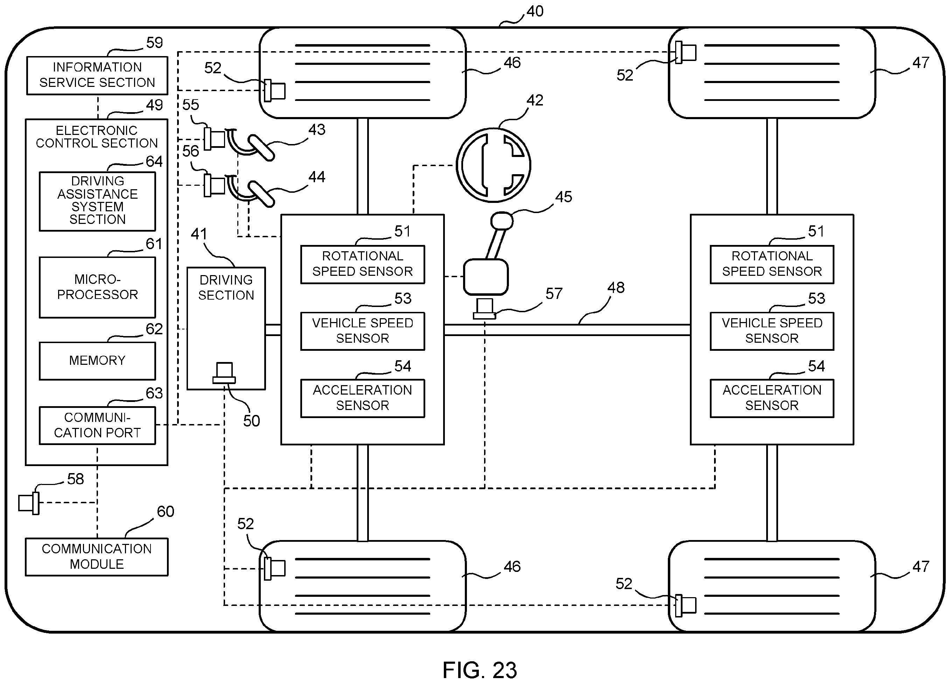

FIG. 23 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

### Claims

1. A terminal comprising:

   a receiving section that receives a configuration indicating X channel measurement resources for X transmission/reception points (TRPs) for coherent joint transmission; and
   a control section that controls reporting of channel state information (CSI) part 1 and CSI part 2, based on the configuration.

2. The terminal according to claim 1, wherein

the CSI part 1 for one of the X TRPs includes at least one of a channel state information reference signal (CSI-RS) resource indicator (CRI) indicating a corresponding channel measurement resource and a reference CSI indicator indicating one of the X channel measurement resources.

3. The terminal according to claim 1 or 2, wherein the CSI part 2 for one of the X TRPs includes at least one of an index indicating a difference in at least one of phase and amplitude between a plurality of TRPs, and a channel quality indicator (CQI) based on the X TRPs, for at least one of a layer and a polarized wave.

4. The terminal according to claim 3, wherein the index is included in group 2 among group 0 to the group 2, or group 3 subsequent to the group 2.

5. A radio communication method for a terminal, the radio communication method comprising:

   receiving a configuration indicating X channel measurement resources for X transmission/reception points (TRPs) for coherent joint transmission; and
   controlling reporting of channel state information (CSI) part 1 and CSI part 2, based on the configuration.

6. A base station comprising:

   a transmitting section that transmits a configuration indicating X channel measurement resources for X transmission/reception points (TRPs) for coherent joint transmission; and
   a control section that controls reception of a report of channel state information (CSI) part 1 and CSI part 2, based on the configuration.

Mapping of elements of $i_{2,3,l}$: $k_{l,p}^{(1)}$ to $p_{l,p}^{(1)}$

| $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ |
|---|---|---|---|---|---|---|---|
| 0 | Reserved | 4 | $\left(\dfrac{1}{2048}\right)^{1/4}$ | 8 | $\left(\dfrac{1}{128}\right)^{1/4}$ | 12 | $\left(\dfrac{1}{8}\right)^{1/4}$ |
| 1 | $\dfrac{1}{\sqrt{128}}$ | 5 | $\dfrac{1}{2\sqrt{8}}$ | 9 | $\dfrac{1}{\sqrt{8}}$ | 13 | $\dfrac{1}{\sqrt{2}}$ |
| 2 | $\left(\dfrac{1}{8192}\right)^{1/4}$ | 6 | $\left(\dfrac{1}{512}\right)^{1/4}$ | 10 | $\left(\dfrac{1}{32}\right)^{1/4}$ | 14 | $\left(\dfrac{1}{2}\right)^{1/4}$ |
| 3 | $\dfrac{1}{8}$ | 7 | $\dfrac{1}{4}$ | 11 | $\dfrac{1}{2}$ | 15 | 1 |

FIG. 1

Mapping of elements of $i_{2,4,l}$: $k_{l,i,f}^{(2)}$ to $p_{l,i,f}^{(2)}$

| $k_{l,i,f}^{(2)}$ | $p_{l,i,f}^{(2)}$ |
|---|---|
| 0 | $\dfrac{1}{8\sqrt{2}}$ |
| 1 | $\dfrac{1}{8}$ |
| 2 | $\dfrac{1}{4\sqrt{2}}$ |
| 3 | $\dfrac{1}{4}$ |
| 4 | $\dfrac{1}{2\sqrt{2}}$ |
| 5 | $\dfrac{1}{2}$ |
| 6 | $\dfrac{1}{\sqrt{2}}$ |
| 7 | 1 |

FIG. 2

FIG. 3

FIG. 4A

FIG. 4B

TRP

TRP

x1
Precoder:V1

x2
Precoder:V2

H1

H2

UE

TRP

x

H1

TRP

x

H2

Precoder:V

UE

x

H3

TRP

H4

x

TRP

EP 4 472 281 A1

X=4

CSI-RS resource #1

CSI-RS resource #4

UE

CSI-RS resource #5

CSI-RS resource #8

FIG. 5

N=2, X=4

FIG. 6

EP 4 472 281 A1

CSI-RS resource #1:reference

CSI-RS resource #2

associated

UE

CSI-RS resource #3

CSI-RS resource #4

FIG. 7

## FIG. 8A

| CMR configuration (Option 1-1) | CSI-RS resource #1 | CSI-RS resource #4 | CSI-RS resource #5 | CSI-RS resource #8 |
|---|---|---|---|---|
| IMR configuration (Option 2-B) | ZP CSI-RS resource #2 | ZP CSI-RS resource #2 | ZP CSI-RS resource #2 | ZP CSI-RS resource #2 |

## FIG. 8B

| CMR configuration (Option 1-1) | CSI-RS resource #1 | CSI-RS resource #4 | CSI-RS resource #5 | CSI-RS resource #8 |
|---|---|---|---|---|
| IMR configuration (Option 2-B) | ZP CSI-RS resource #2 | | | |

CSI-RS resource #1:  CRI+S-TRP CSI as reference CSI

CSI-RS resource #4:         CRI+S-TRP CSI, inter-TRP amplitude/phase PMI based on reference CSI

UE

CSI-RS resource #5:         CRI+S-TRP CSI, inter-TRP amplitude/phase PMI based on reference CSI

CSI-RS resource #8:  CRI+S-TRP CSI, inter-TRP amplitude/phase PMI based on reference CSI

FIG. 9

| PMI index | new CSI information for CJT CSI |
|-----------|--------------------------------|
| $i_{3,1}$ | Inter-TRP phasing index (compared with reference CSI/TRP) |
| $i_{3,2}$ | Inter-TRP amplitude index (compared with reference CSI/TRP) |
| $i_3$ | Inter-TRP index (compared with reference CSI/TRP) |

FIG. 10

CSI-RS resource #1: CRI+S-TRP CSI as reference CSI

CSI-RS resource #4: CRI+S-TRP CSI, inter-TRP amplitude/phase PMI based on reference CSI

UE

CSI-RS resource #5: CRI+S-TRP CSI, inter-TRP amplitude/phase PMI based on reference CSI, and inter-TRP amplitude/phase PMI based on S-TRP CSI of CSI-RS resource#4

CSI-RS resource #8: CRI+S-TRP CSI, inter-TRP amplitude/phase PMI based on reference CSI, inter-TRP amplitude/phase PMI based on S-TRP CSI of CSI-RS resource#4, and inter-TRP amplitude/phase PMI based on S-TRP CSI of CSI-RS resource#5

FIG. 11

| PMI index | new CSI information for CJT CSI |
|---|---|
| $i_{3,1}$ | Inter-TRP phasing index (compared with reference CSI/TRP) |
| $i_{3,2}$ | Inter-TRP amplitude index (compared with reference CSI/TRP) |
| $i_{3,2}$ | Inter-TRP phasing index (compared with 2nd reported CSI/TRP) |
| $i_{3,4}$ | Inter-TRP amplitude index (compared with 2nd reported CSI/TRP) |
| $i_{3,5}$ | Inter-TRP phasing index (compared with 3rd reported CSI/TRP) |
| $i_{3,6}$ | Inter-TRP amplitude index (compared with 3rd reported CSI/TRP) |

FIG. 12

CSI-RS resource #1:  CRI+S-TRP CSI as reference CSI

CSI-RS resource #4:        CRI+S-TRP CSI (2-TRP CJT CQI based on CSI-RS resource #1 and #4)

UE

CSI-RS resource #5:        CRI+S-TRP CSI (3-TRP CJT CQI based on CSI-RS resource #1, #4,  and #5)

CSI-RS resource #8:  CRI+S-TRP CSI (4-TRP CJT CQI based on CSI-RS resource #1, #4,  #5, and #8)

FIG. 13

CSI-RS resource #1:  CRI+S-TRP CSI as reference CSI

CSI-RS resource #4:          CRI+S-TRP CSI, 2-TRP CJT CQI based on CSI-RS resource #1 and #4

UE

CSI-RS resource #5:          CRI+S-TRP CSI, 2-TRP CJT CQI / 3-TRP CJT CQI

CSI-RS resource #8:  CRI+S-TRP CSI, 2-TRP CJT CQI / 3-TRP CJT CQI / 4-TRP CJT CQI

FIG. 14

| Index | Value |
|-------|-------|
| 0 | Reserved or 0 |
| ... | ... |
| M-4 | $\sqrt{1/16}$ |
| M-3 | $\sqrt{1/16}$ |
| M-2 | $\sqrt{1/16}$ |
| M-1 | $\sqrt{1/16}$ |
| M | 1 |

FIG. 15

| Index | Value |
|-------|-------|
| 0 | 1 |
| 1 | $e^{j\,2\pi/P}$ |
| 2 | $e^{j\,4\pi/P}$ |
| 3 | $e^{j\,6\pi/P}$ |
| ... | ... |
| P-1 | $e^{j\,2\pi(P-1)/P}$ |

FIG. 16

| Index | Value |
|:---:|:---:|
| 0 | 1 |
| 1 | $e^{j\,2\pi/P}$ |
| 2 | $e^{j\,4\pi/P}$ |
| ... | ... |
| P-1 | $e^{j\,2\pi(P-1)/P}$ |
| P | $\sqrt{1/2}\,e^{j\,2\pi/P}$ |
| P+1 | $\sqrt{1/2}\,e^{j\,4\pi/P}$ |
| ... | ... |

FIG. 17

## FIG. 18A

Option 5-1

| CSI part 1 for CJT CSI for 4 TRPs |
|---|
| CSI part 1 for CJT CSI for a TRP (1st CJT CSI) |
| CSI part 1 for CJT CSI for a TRP (2nd CJT CSI) |
| CSI part 1 for CJT CSI for a TRP (3rd CJT CSI) |
| CSI part 1 for CJT CSI for a TRP (4th CJT CSI) |

| CSI part 2 for CJT CSI for 4 TRPs |
|---|
| CSI part 2 for CJT CSI for a TRP (1st CJT CSI) |
| CSI part 2 for CJT CSI for a TRP (2nd CJT CSI) |
| CSI part 2 for CJT CSI for a TRP (3rd CJT CSI) |
| CSI part 2 for CJT CSI for a TRP (4th CJT CSI) |

## FIG. 18B

Option 5-2

| CSI part 1 for CJT CSI for 4 TRPs |
|---|
| CSI part 1 for CJT CSI for a TRP (1st CJT CSI) |

| CSI part 2 for CJT CSI for 4 TRPs |
|---|
| CSI part 2 for CJT CSI for a TRP (1st CJT CSI) |
| CSI part 1 and part 2 for CJT CSI for a TRP (2nd CJT CSI) |
| CSI part 1 and part 2 for CJT CSI for a TRP (3rd CJT CSI) |
| CSI part 1 and part 2 for CJT CSI for a TRP (4th CJT CSI) |

FIG. 19

FIG. 20

EP 4 472 281 A1

FIG. 21

BASE STATION 10, USER TERMINAL 20

1001

PROCESSOR

1007

COMMUNICATION
APPARATUS

1004

1002

MEMORY

1005

INPUT
APPARATUS

1003

STORAGE

1006

OUTPUT
APPARATUS

FIG. 22

FIG. 23

## INTERNATIONAL SEARCH REPORT

International application No.

**PCT/JP2022/003341**

### A. CLASSIFICATION OF SUBJECT MATTER

*H04W 28/16*(2009.01)i; *H04W 16/28*(2009.01)i; *H04W 24/10*(2009.01)i; *H04W 72/04*(2009.01)i
FI:  H04W28/16; H04W16/28 150; H04W24/10; H04W72/04 136

According to International Patent Classification (IPC) or to both national classification and IPC

### B. FIELDS SEARCHED

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2021/254954 A1 (FRAUNHOFER-GESELLSCHAFT ZUR FOERDERUNG DER ANGEWANDTEN FORSCHUNG E.V.) 23 December 2021 (2021-12-23) p. 12, line 23 to p. 13, line 9, p. 15, lines 20-30, p. 18, lines 1-15, p. 18, lines 33-34, p. 19, lines 19-21, p. 20, lines 28-30, p. 21, lines 1-6, p. 23, lines 28-32 | 1-3, 5-6 |
| A | | 4 |
| Y | US 2018/0042028 A1 (SAMSUNG ELECTRONICS CO., LTD.) 08 February 2018 (2018-02-08) paragraph [0170] | 1-3, 5-6 |
| A | | 4 |
| Y | US 2020/0235790 A1 (SAMSUNG ELECTRONICS CO., LTD.) 23 July 2020 (2020-07-23) paragraphs [0215], [0249], [0272] | 2 |
| A | | 1, 3-6 |
| Y | JP 2020-517158 A (LG ELECTRONICS INC) 11 June 2020 (2020-06-11) paragraph [0336], fig. 10 | 3 |
| A | | 1-2, 4-6 |

[✓] Further documents are listed in the continuation of Box C.     [✓] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 August 2022** | **13 September 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**

International application No.

**PCT/JP2022/003341**

C.    DOCUMENTS CONSIDERED TO BE RELEVANT

| Category* | Citation of document, with indication, where appropriate, of the relevant passages | Relevant to claim No. |
|---|---|---|
| Y | JP 2015-523013 A (INTERDIGITAL PATENT HOLDINGS, INC) 06 August 2015 (2015-08-06)<br>paragraphs [0099], [0108]-[0110] | 3 |
| A | | 1-2, 4-6 |

Form PCT/ISA/210 (second sheet) (January 2015)

**INTERNATIONAL SEARCH REPORT**
Information on patent family members

| International application No. |
|---|
| **PCT/JP2022/003341** |

| Patent document cited in search report | | | Publication date (day/month/year) | Patent family member(s) | | | Publication date (day/month/year) |
|---|---|---|---|---|---|---|---|
| WO | 2021/254954 | A1 | 23 December 2021 | (Family: none) | | | |
| US | 2018/0042028 | A1 | 08 February 2018 | WO | 2018/026241 | A1 | |
| | | | | KR | 10-2019-0026964 | A | |
| US | 2020/0235790 | A1 | 23 July 2020 | JP | 2022-518719 | A | |
| | | | | WO | 2020/149706 | A1 | |
| | | | | CN | 113330691 | A | |
| | | | | KR | 10-2021-0106572 | A | |
| JP | 2020-517158 | A | 11 June 2020 | US | 2019/0109626 | A1 | |
| | | | | paragraph [0350], fig. 10 | | | |
| | | | | WO | 2019/066622 | A1 | |
| | | | | EP | 3609091 | A1 | |
| | | | | KR | 10-2019-0038461 | A | |
| | | | | CN | 110945799 | A | |
| JP | 2015-523013 | A | 06 August 2015 | US | 2013/0322376 | A1 | |
| | | | | paragraphs [0104], [0115]-[0125] | | | |
| | | | | WO | 2013/184613 | A2 | |
| | | | | EP | 3883172 | A1 | |
| | | | | KR | 10-2015-0027194 | A | |
| | | | | CN | 104584450 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010